(19) **Europäisches Patentamt / European Patent Office / Office européen des brevets**

(11) **EP 4 280 477 A1**

(12) **EUROPEAN PATENT APPLICATION**
published in accordance with Art. 153(4) EPC

(43) Date of publication:
**22.11.2023 Bulletin 2023/47**

(21) Application number: **22774263.2**

(22) Date of filing: **23.03.2022**

(51) International Patent Classification (IPC):
**H04B 10/516** (2013.01)

(52) Cooperative Patent Classification (CPC):
**H04B 10/516; H04L 1/00**

(86) International application number:
**PCT/CN2022/082478**

(87) International publication number:
**WO 2022/199607 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2021 CN 202110310540**

(71) Applicant: **Huawei Technologies Co., Ltd.**
**Shenzhen, Guangdong 518129 (CN)**

(72) Inventors:
- **YAN, Mao**
  **Shenzhen, Guangdong 518129 (CN)**
- **GUO, Zhiheng**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DATA TRANSMISSION METHOD AND APPARATUS**

(57)    This application provides a data transmission method and apparatus, to increase a coding gain. The method includes: determining a transport block size, where the transport block size is related to a first parameter, the first parameter includes at least one of the following: a modulation and coding scheme, configuration information of a transmission resource, a quantity $N_{RE}$ of resources to which a transport block is mapped, and a quantized intermediate value $N'_{info}$, the first parameter is related to a second parameter, and the second parameter includes at least one of the following: an upper limit value (1) of the quantity of resources to which the transport block is mapped, an upper limit value (2) of the transport block size, and an upper limit value (3) of the quantized intermediate value; and sending or receiving data on the transmission resource based on the transport block size.

FIG. 6

**Description**

**CROSS-REFERENCE TO RELATED APPLICATIONS**

This application claims priority to Chinese Patent Application No. 202110310540.X, filed with the China National Intellectual Property Administration on March 23, 2021 and entitled "DATA TRANSMISSION METHOD AND APPARATUS", which is incorporated herein by reference in its entirety.

**TECHNICAL FIELD**

Embodiments of this application relate to the field of communication technologies, and in particular, to a data transmission method and apparatus.

**BACKGROUND**

In an uplink communication process or a downlink communication process in a wireless communication network, channel coding is performed on data to ensure data transmission reliability and spectral efficiency. Channel coding relates to code block segmentation and coding on a transport block sent from a medium access control (medium access control, MAC) layer to a physical layer.

In a current coding scheme, there is a case in which an excessively large quantity of mapping resources are allocated, a quantity of code blocks increases, and a length of a single code block decreases. Consequently, a coding gain is relatively low.

**SUMMARY**

Embodiments of this application provide a data transmission method and apparatus, to increase a coding gain.

According to a first aspect, an embodiment of this application provides a data transmission method, including:

determining a transport block size, where the transport block size is related to a first parameter, the first parameter includes at least one of the following: a modulation and coding scheme, configuration information of a transmission resource, a quantity $N_{RE}$ of resources to which a transport block is mapped, and a quantized intermediate value $N'_{info}$, the first parameter is related to a second parameter, and the second parameter includes at least one of the following: an upper limit value $NRE$ of the quantity of resources to which the transport block is mapped, an upper limit value $T_{tb}^{Th}$ of the transport block size, and an upper limit value $N'^{Th}_{info}$ of the quantized intermediate value; and sending or receiving data on the transmission resource based on the transport block size.

That the first parameter is related to the second parameter satisfies at least one of the following conditions:

at least one parameter in $N_{RE}^{Th}$, $T_{tb}^{Th}$, and $N'^{Th}_{info}$ included in the second parameter is related to the modulation and coding scheme;

at least one parameter in $N_{RE}^{Th}$, $T_{tb}^{Th}$, and $N'^{Th}_{info}$ included in the second parameter is related to the configuration information of the transmission resource;

the quantity $N_{RE}$ of resources to which the transport block is mapped is related to at least one parameter in $N_{RE}^{Th}$, $T_{tb}^{Th}$, and $N'^{Th}_{info}$ included in the second parameter, for example, the quantity $N_{RE}$ of resources to which the transport block is mapped is related to $NRE$ included in the second parameter; and

the quantized intermediate value $N'_{info}$ is related to at least one parameter in $N_{RE}^{Th}$, $T_{tb}^{Th}$, and $N'^{Th}_{info}$ included in the second parameter, for example, the quantity $N_{RE}$ of resources to which the transport block is mapped is

related to $N'^{Th}_{info}$ included in the second parameter.

In this embodiment of this application, for the first parameter used to determine the transport block size, an upper limit value, or referred to as a nominal value, a reference value, or the like, of a corresponding parameter is set, to control the transport block size, so as to control a code block length corresponding to the transport block, thereby avoiding a case in which a length of a single code block is relatively small, and improving a coding gain.

In an optional implementation, before the transport block size is determined, the first parameter may be first obtained. Optionally, in the first aspect, some of parameters that can be included in the first parameter at most may be configured or scheduled, for example, the modulation and coding scheme and the configuration information of the transmission resource. Some of the parameters may be determined according to some rules or conditions, for example, the quantity $N_{RE}$ of resources to which the transport block is mapped and the quantized intermediate value $N'_{info}$.

In an optional implementation, before the transport block size is determined, a message indicating a quantity of slots to which the transport block is mapped may be first obtained. The message includes an uplink grant message, a downlink grant message, a radio resource control RRC message, or a medium access control-control element MAC-CE message.

According to a second aspect, an embodiment of this application provides a data transmission apparatus, including:

a processing module, configured to determine a transport block size, where the transport block size is related to a first parameter, the first parameter includes at least one of the following: a modulation and coding scheme, configuration information of a transmission resource, a quantity $N_{RE}$ of resources to which a transport block is mapped, and a quantized intermediate value $N'_{info}$, the first parameter is related to a second parameter, and the second parameter includes at least one of the following: an upper limit value $N^{Th}_{RE}$ of the quantity of resources to which the transport block is mapped, an upper limit value $T^{Th}_{tb}$ of the transport block size, and an upper limit value $N'^{Th}_{info}$ of the quantized intermediate value; and a communication module, configured to send or receive data on the transmission resource based on the transport block size.

In this embodiment of this application, for the first parameter used to determine the transport block size, an upper limit value, or referred to as a nominal value, a reference value, or the like, of a corresponding parameter is set, to control the transport block size, so as to control a code block length corresponding to the transport block, thereby avoiding a case in which a length of a single code block is relatively small, and improving a coding gain.

In an optional implementation, the processing module is further configured to: before determining the transport block size, obtain the first parameter by using the communication module. Optionally, in the first aspect, some of parameters that can be included in the first parameter at most may be configured or scheduled, for example, the modulation and coding scheme and the configuration information of the transmission resource. Some of the parameters may be determined according to some rules or conditions, for example, the quantity $N_{RE}$ of resources to which the transport block is mapped and the quantized intermediate value $N'_{info}$.

In an optional implementation, the processing module is further configured to: before determining the transport block size, obtain, by using the communication module, a message indicating a quantity of slots to which the transport block is mapped. The message includes an uplink grant message, a downlink grant message, a radio resource control RRC message, or a medium access control-control element MAC-CE message.

The following is some optional implementations of either of the first aspect and the second aspect.

In an optional implementation, the quantity $N_{RE}$ of resources to which the transport block is mapped may be determined based on the transmission resource and/or the upper limit value $N^{Th}_{RE}$ of the quantity of resources to which the transport block is mapped. The quantity $N_{RE}$ of resources to which the transport block is mapped satisfies the following condition:

$$N_{RE} = \min\left(N_{RE}{}^{*}, N^{Th}_{RE}\right);$$

or

$$N_{RE} = N_{RE}{}^{*},$$

where

*min* represents a function of taking a minimum value; and $N_{RE}{}^*$ is a quantity that is determined based on the transmission resource and that is of resources to which the transport block can be mapped.

In an optional implementation, $N_{RE}{}^*$ satisfies the following condition:

$$N_{RE}{}^* = N \cdot \left(N_{SC}^{RB} \cdot N_{symb}^{sh} - N_{DMRS}^{PRB} - N_{oh}^{PRB}\right) \cdot n_{PRB},$$

where

$N$ represents a quantity of slots included in the transmission resource, $N$ is a positive integer, $N_{SC}^{RB}$ represents a quantity of subcarriers included in one resource block RB in frequency domain, $N_{symb}^{sh}$ represents a quantity of scheduled OFDM symbols in one slot, $N_{DMRS}^{PRB}$ represents a quantity of resource elements REs of a demodulation reference signal DMRS in each physical resource block PRB in one slot, $N_{oh}^{PRB}$ represents a quantity of overheads, and $n_{PRB}$ represents a quantity of physical resource blocks PRBs on the transmission resource.

In an optional implementation, a value of $N_{RE}{}^*$ is related to a quantity of physical resource blocks PRBs on the transmission resource and a quantity of resource elements REs allocated to the data in each PRB on the transmission resource. $N_{RE}{}^*$ satisfies the following condition:

$$N_{RE}{}^* = \sum_{k=0}^{n_{PRB}-1} N'_{RE,k},$$

where

$n_{PRB}$ represents a quantity of physical resource blocks PRBs on the transmission resource, $N'_{RE,k}$ represents a quantity of resource elements REs that can be allocated to the data in a $k^{th}$ PRB on the transmission resource, $0 \le k \le n_{PRB} - 1$, $k$ is a natural number, and $N'_{RE,k}$ satisfies the following condition:

$$N'_{RE,k} = N \cdot \left(N_{SC}^{RB} \cdot N_{symb,k}^{sh} - N_{DMRS,k}^{PRB} - N_{oh,k}^{PRB}\right);$$

or

$$N'_{RE,k} = \sum_{s=0}^{N-1} \left(N_{SC}^{RB} \cdot N_{symb,k}^{sh}(s) - N_{DMRS,k}^{PRB}(s) - N_{oh,k}^{PRB}(s)\right),$$

where

$N$ represents a quantity of slots included in the transmission resource, $N$ is a positive integer, $N_{SC}^{RB}$ represents a quantity of subcarriers included in one resource block RB in frequency domain, $N_{symb,k}^{sh}$ represents a quantity of scheduled OFDM symbols in a $k^{th}$ RB in one slot, $N_{DMRS,k}^{PRB}$ represents a quantity of resource elements REs of a demodulation reference signal DMRS in a $k^{th}$ physical resource block PRB in one slot, $N_{oh}^{PRB}$ represents a quantity of overheads of each RB in one slot, $N_{symb,k}^{sh}(s)$ represents a quantity of scheduled OFDM symbols in a $k^{th}$ RB in a slot s, $N_{DMRS,k}^{PRB}(s)$ represents a quantity of resource elements REs of a demodulation reference signal DMRS in a $k^{th}$ physical resource block PRB in the slot s, $N_{oh,k}^{PRB}(s)$ represents a quantity of overheads of each RB in the slot s, $0 \leq s \leq N$ - 1, and s is a natural number.

In another optional implementation, $N_{RE}{}^*$ is related to a quantity of slots included in the transmission resource and a quantity of resource elements REs that can be allocated to the data in each slot. $N_{RE}{}^*$ satisfies the following condition:

$$N_{RE}{}^* = \sum_{s=0}^{N-1} N'_{RE}(s),$$

where
N represents a quantity of slots included in the transmission resource, $N'_{RE}(s)$ represents a quantity of resource elements REs that can be allocated to the data in a slot s on the transmission resource, $0 \leq s \leq N$ - 1, s is a natural number, N is a positive integer, and $N'_{RE}(s)$ satisfies the following condition:

$$N'_{RE}(s) = \sum_{k=0}^{n_{PRB}(s)-1} \left( N_{SC}^{RB} \cdot N_{symb,k}^{sh}(s) - N_{DMRS,k}^{PRB}(s) - N_{oh,k}^{PRB}(s) \right),$$

where

$n_{PRB}(s)$ represents a quantity of physical resource blocks in the slot s, $N_{SC}^{RB}$ represents a quantity of subcarriers included in one resource block RB in frequency domain, $N_{symb,k}^{sh}(s)$ represents a quantity of scheduled OFDM symbols in a $k^{th}$ RB in the slot s, $N_{DMRS,k}^{PRB}(s)$ represents a quantity of resource elements REs of a demodulation reference signal DMRS in a $k^{th}$ physical resource block PRB in the slot s, $N_{oh,k}^{PRB}(s)$ represents a quantity of overheads of each RB in the slot s, $0 \leq k \leq n_{PRB}(s)$ - 1, and k is a natural number.

In an optional implementation, a manner of determining the quantized intermediate value $N'_{info}$ is related to a value range of an unquantized intermediate value $N_{info}$, and the unquantized intermediate value $N_{info}$ is determined based on a parameter of the modulation and coding scheme, a quantity of mapping layers of the transport block, and the quantity of resources to which the transport block is mapped. In other words, a value of the quantized intermediate value $N'_{info}$ is related to the parameter of the modulation and coding scheme, the quantity of mapping layers of the transport block, and the quantity of resources to which the transport block is mapped. The parameter of the modulation and coding scheme may include a target code rate and a modulation order that are corresponding to the modulation and coding scheme.

In an optional implementation, the quantized intermediate value $N'_{info}$ satisfies the following condition:

$$N'_{info} = min \left( max \left( 24, 2^n \times \left\lfloor \frac{N_{info}}{2^n} \right\rfloor \right), N'_{info}^{Th} \right);$$

or

$$N'_{info} = max \left( 24, 2^n \times \left\lfloor \frac{N_{info}}{2^n} \right\rfloor \right),$$

where
*min* represents a function of taking a minimum value, *max* represents a function of taking a maximum value, $n = max(3, \lfloor log_2(N_{info}) \rfloor - 6)$, $N_{info} = N_L$ - $R \cdot Q_m \cdot N_{RE}$, $N_{info}$ represents an unquantized intermediate value, $N_{info} \leq 3824$, $N_L$ represents a quantity of mapping layers of the transport block, R is a target code rate corresponding to the modulation and coding scheme, and $Q_m$ is a modulation order corresponding to the modulation and coding scheme.

In another optional implementation, the quantized intermediate value $N'_{info}$ satisfies the following condition:

$$N'_{info} = \min\left(N'^{Th}_{info}, 2^n \times \text{round}\left(\frac{N_{info}-24}{2^n}\right)\right);$$

or

$$N'_{info} = \max\left(3840, 2^n \times round\left(\frac{N_{info}-24}{2^n}\right)\right),$$

where $3824 < N_{info} \leq C_0 \times N'^{Th}_{info}$, a value of $C_0$ is 1 or 2, $n = \lfloor log_2(N_{info} - 24)\rfloor - 5$, $N_{info} = N_L \cdot R \cdot Q_m \cdot N_{RE}$, $N_{info}$ represents an unquantized intermediate value, $N_L$ represents a quantity of mapping layers of the transport block, $R$ is a target code rate corresponding to the modulation and coding scheme, and $Q_m$ is a modulation order corresponding to the modulation and coding scheme.

In an optional implementation, the transport block size may be determined based on $N'_{info}$ and the upper limit value $T^{Th}_{tb}$ of the transport block size in the foregoing optional implementation. The transport block size satisfies the following condition:

$$TBS = min\left(TBS^*, T^{Th}_{tb}\right);$$

or

$$TBS = TBS^*,$$

where
*TBS* represents the transport block size, *TBS\** represents a maximum value that is in a preset candidate transport block size set and that is less than $N'_{info}$, and the preset candidate transport block size set includes values of a plurality of transport block sizes.

In an optional implementation, the transport block size is determined based on the target code rate corresponding to the modulation and coding scheme and $N'_{info}$ in the foregoing another optional implementation.

For example:

if $R \leq \frac{1}{4}$, $TBS = 8 \times C \times \left\lceil\frac{N'_{info}+24}{8 \times C}\right\rceil - 24$ and $C = \left\lceil\frac{N'_{info}+24}{3816}\right\rceil$; or

if $R > \frac{1}{4}$ and $N'_{info} > 8424$, $TBS = 8 \times C \times \left\lceil\frac{N'_{info}+24}{8 \times C}\right\rceil - 24$ and C = $\left\lceil\frac{N'_{info}+24}{8424}\right\rceil$; or

if $R > \frac{1}{4}$ and $N'_{info} \leq 8424$, $TBS = 8 \times \left\lceil\frac{N'_{info}+24}{8}\right\rceil - 24$.

In an optional implementation, a value of $N_L$ is 1.

In an optional implementation, a value of $T^{Th}_{tb}$ is any one of 3744, 3752, 3776, 3824, 3848, 8192, 8216, and 8424, and/or a value of $N'^{Th}_{info}$ is any one of 3744, 3776, 3808, 8192, and 8424.

In an optional implementation, the upper limit value $T_{tb}^{Th}$ of the transport block size is related to the target code rate corresponding to the modulation and coding scheme.

For example:

when the target code rate corresponding to the modulation and coding scheme is less than or equal to 0.25, the value of $T_{tb}^{Th}$ is 3824; or

when the target code rate corresponding to the modulation and coding scheme is less than 0.3, the value of $T_{tb}^{Th}$ is 3752; or

when the target code rate corresponding to the modulation and coding scheme is greater than or equal to 0.3, the value of $T_{tb}^{Th}$ is 8192 or 8424.

In an optional implementation, the transmission resource includes one or more slots, and the quantity of slots included in the transmission resource is related to at least one of a parameter of the modulation and coding scheme, the configuration information of the transmission resource, and a quantity of scheduled resource blocks.

In an optional implementation, a larger modulation and coding scheme MCS index corresponding to the parameter of the modulation and coding scheme indicates a smaller quantity of slots included in the transmission resource.

In an optional implementation, the configuration information of the transmission resource includes information indicating a transport block mapping manner, and the transport block mapping manner includes mapping a transport block to a plurality of slots. In this embodiment of this application, the transport block may be mapped to a plurality of slots for transmission, so that a code block length can be increased, and coding performance can be improved.

In an optional implementation, the second parameter is associated with the modulation and coding scheme. Based on the association relationship, a configuration manner of the second parameter can be simplified, overheads can be reduced, and coding performance can be improved.

According to a third aspect, this application provides a communication apparatus, including a processor. The processor is coupled to a memory, the memory is configured to store a computer program or instructions, and the processor is configured to execute the computer program or the instructions, to perform the method in the implementations of the first aspect. The memory may be located inside or outside the apparatus. There are one or more processors.

According to a fourth aspect, this application provides a communication apparatus, including a logic circuit and an input/output interface. The input/output interface is configured to communicate with another apparatus, and the processor is configured to perform the method in the implementations of the first aspect.

According to a fifth aspect, this application provides a communication system, including a network device configured to perform the method in the implementations of the first aspect and a terminal device configured to perform the method in the implementations of the first aspect.

According to a sixth aspect, this application further provides a chip system, including a processor, configured to perform the method in the implementations of the first aspect.

According to a seventh aspect, this application further provides a computer program product. The computer product includes a computer program, and when the computer program is run, the method in the implementations of the first aspect is performed.

According to an eighth aspect, this application further provides a computer-readable storage medium. The computer-readable storage medium stores a computer program or instructions, and when the instructions are run on a computer, the method in the implementations of the first aspect is implemented.

For technical effects that can be achieved in the third aspect to the eighth aspect, refer to technical effects that can be achieved by corresponding technical solutions in the first aspect. Details are not described herein again.

**BRIEF DESCRIPTION OF DRAWINGS**

FIG. 1 is a schematic diagram of uplink and downlink communication processes;
FIG. 2 is a schematic diagram of a physical layer data processing process;
FIG. 3 is a schematic diagram of a relationship between a transport block size and a quantity of schedulable symbols;

FIG. 4 is a schematic diagram of a relationship between a code block length and a quantity of mapping resources;
FIG. 5 is a schematic diagram of an architecture of a communication system according to an embodiment of this application;
FIG. 6 is a schematic flowchart of a data transmission method according to an embodiment of this application;
FIG. 7a is a schematic diagram 1 of resource allocation according to an embodiment of this application;
FIG. 7b is a schematic diagram 2 of resource allocation according to an embodiment of this application;
FIG. 7c is a schematic diagram 3 of resource allocation according to an embodiment of this application;
FIG. 8 is a schematic flowchart of another data transmission method according to an embodiment of this application;
FIG. 9 is a block diagram of a structure of a data transmission apparatus according to an embodiment of this application;
FIG. 10 is a schematic diagram 1 of a structure of a communication apparatus according to an embodiment of this application; and
FIG. 11 is a schematic diagram 2 of a structure of a communication apparatus according to an embodiment of this application.

## DESCRIPTION OF EMBODIMENTS

Embodiments of this application may be applied to a wireless communication network, for example, a 4th generation (4th generation, 4G) network (for example, LTE), a 5G network, or a future network. The following further describes this application in detail with reference to the accompanying drawings.
First, some terms in this application are explained and described, to help a person skilled in the art have a better understanding.

(1) Network device and terminal device

The network device may communicate with the terminal device, and provide a radio access service for the terminal device. The network device may also be referred to as a base station device, or may be referred to as a base station, a relay station, an access node (access node, AN), or the like. For example, the network device may be an eNB or an eNodeB (evolutional NodeB) in a long term evolution (long term evolution, LTE) system. Alternatively, the network device may be a radio controller in a cloud radio access network (cloud radio access network, CRAN) scenario. The network device may alternatively be a base station device in a 5G network, for example, a new radio (new radio, NR) network, a network device in a future 6G network, or a network device in a future evolved PLMN network. Alternatively, the network device may be a wearable device or a vehicle-mounted device.
The terminal device may also be referred to as user equipment (user equipment, UE), an access terminal, a terminal unit, a terminal station, a mobile station, a mobile console, a remote station, a remote terminal, a mobile device, a mobile terminal, a terminal, a wireless communication device, a terminal agent, a terminal apparatus, or the like. The terminal device is a device that provides voice and/or data connectivity for a user. The terminal device may include a handheld device with a wireless connection function, a computing device, another processing device connected to a wireless modem, a vehicle, a vehicle-mounted device, a vehicle-mounted module, a wearable device, a terminal device in a 5G network, a terminal device in a future evolved PLMN network, or the like. For example, the terminal device may be a cellular phone, a cordless phone, a session initiation protocol (session initiation protocol, SIP) phone, a wireless local loop (wireless Local Loop, WLL) station, or a personal digital assistant (personal digital assistant, PDA). The terminal device may alternatively be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), or a wireless terminal in a smart home (smart home).

(2) Resource block

The resource block (resource block, RB) may also be referred to as a physical resource block (physical resource block), and is a basic unit of a frequency resource in a communication system based on orthogonal frequency division multiplexing (orthogonal frequency divided multiplexing, OFDM). One resource block includes at least one resource element (resource element, RE). For example, one resource block usually includes 12 resource elements, and one resource element is also referred to as one subcarrier. Several resource blocks form one resource block group (resource block group, RBG), which is alternatively referred to as a physical resource block group. Generally, precoding is performed in a unit of a resource block or a resource block group, and a basic unit for performing precoding sending is also referred to as a precoding resource block group (precoding resource block group, PRG). One precoding resource group may not be smaller than one resource block group.

(3) Subcarrier spacing

The subcarrier spacing is a type of waveform parameter (numerology) in a communication system, for example, an OFDM-based communication system (for example, 5G). The numerology may be defined by using one or more of the following parameter information: a subcarrier spacing, a cyclic prefix, a time unit, a bandwidth, and the like. For example, the numerology may be defined by the subcarrier spacing and the cyclic prefix (cyclic prefix, CP). CP information may include a CP length and/or a CP type. For example, the CP may be a normal cyclic prefix (normal cyclic prefix, NCP) or an extended cyclic prefix (extended cyclic prefix, ECP). The time unit is used to represent a time unit in time domain, and may be, for example, a sampling point, a symbol, a mini-slot, a slot, a subframe, or a radio frame. Time unit information may include a type, a length, a structure, or the like of the time unit. For example, some possible parameters are shown in the following Table 1a.

**Table 1a**

| $\mu$ | Subcarrier spacing $\Delta f = 2^{\mu} \cdot 15$ [kHz] | Cyclic prefix cyclic prefix |
|---|---|---|
| 0 | 15 | Normal |
| 1 | 30 | Normal |
| 2 | 60 | Normal, extended |
| 3 | 120 | Normal |
| 4 | 240 | Normal |
| 5 | 480 | Normal |
| 6 | 960 | Normal |
| 7 | 1920 | Normal |

It may be understood that the subcarrier spacing may have another value. This is not limited.

(4) Reference signal

The reference signal (reference signal, RS) is a known signal used to obtain impact of an external factor (for example, a spatial channel, or an imperfection of a transmit or receive end device) on a signal during transmission, and is used to perform channel estimation, auxiliary signal demodulation, detection, and the like. A transmit end (or receive end) knows or may infer, according to a predetermined rule, time and frequency positions of the reference signal, another wireless signal/a symbol carried at the time and frequency, and the like. Based on functions, reference signals include a demodulation reference signal (demodulation reference signal, DMRS), a channel state information reference signal (channel state information reference signal, CSI-RS), a phase tracking reference signal (phase tracking reference signal, PTRS), a sounding reference signal (sounding reference signal, SRS), and the like. The DMRS and the CSI-RS are used to obtain channel information, and the PTRS is used to obtain phase change information.

(5) Antenna port

The antenna port is a logical concept. One antenna port may correspond to one physical transmit antenna, or may correspond to a plurality of physical transmit antennas. In both the cases, a receiver (receiver) of a terminal does not decompose a signal from a same antenna port. A reason is that from a perspective of the terminal, regardless of whether a channel is formed by using a single physical transmit antenna or by combining a plurality of physical transmit antennas, the antenna port is defined by a reference signal (reference signal) corresponding to the antenna port. For example, an antenna port corresponding to a demodulation reference signal (demodulation reference signal, DMRS) is a DMRS port, and the terminal may obtain channel estimation of the antenna port based on the reference signal. Each antenna port corresponds to one time-frequency resource grid (time/frequency resource grid), and has an independent reference signal. One antenna port is one channel, and the terminal needs to perform channel estimation and data demodulation based on a reference signal corresponding to the antenna port.

(6) Layer

Layer (Layer): After layer mapping is performed on a complex symbol (modulation symbol) obtained by performing scrambling (scrambling) and modulation (modulation) on one or two codewords, the complex symbol is mapped to one or more transport layers (transmission layer, usually also referred to as layer). Each layer corresponds to one valid data flow. A quantity of transport layers, that is, a quantity of layers, is referred to as a "transmission order" or a "transmission rank (rank)". The transmission rank may dynamically change. The quantity of layers needs to be less than or equal to a smaller value in a quantity of transmit antenna ports and a quantity of receive antenna ports, that is, "quantity of layers ≤ min(quantity of transmit antenna ports, quantity of receive antenna ports). In NR downlink communication, a quantity of transport layers is usually equal to a quantity of antenna ports. In downlink control information, a quantity of layers and/or a quantity of antenna ports (or further including a number of each antenna port) used during data and demodulation reference signal (demodulation reference signal, DMRS) transmission are/is indicated. In NR, an antenna port may also correspond to a transmission configuration index (transmission configuration index, TCI), a beam, or the like. For example, one TCI corresponds to a plurality of antenna ports, or one beam corresponds to a plurality of antenna ports. Optionally, the TCI, the transport layer, the antenna port, and the beam may also be collectively referred to as a space domain.

(7) Uplink communication and downlink communication

Generally, a terminal device sends data to a network device through a physical uplink shared channel (physical uplink shared channel, PUSCH), to implement uplink communication, and the network device sends data to the terminal device through a physical downlink shared channel (physical downlink shared channel, PDSCH), to implement downlink communication.

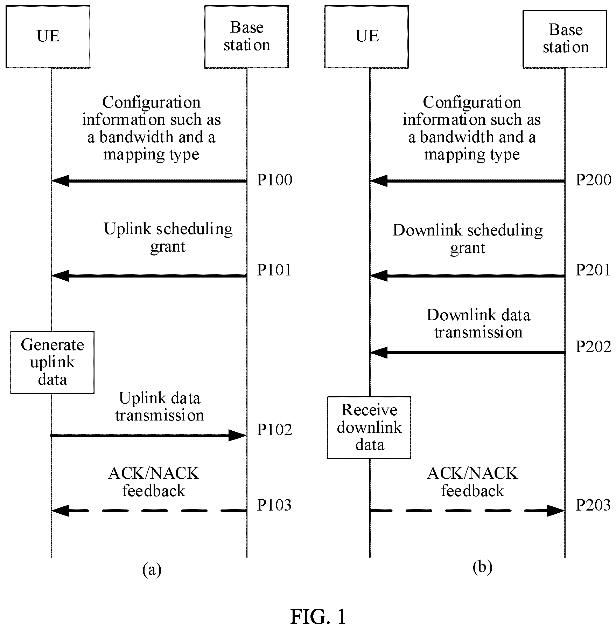

For example, FIG. 1 shows an uplink communication process or a downlink communication process between UE and a base station in LTE or 5G NR.

As shown in (a) in FIG. 1, the uplink communication process includes the following steps.

P100: After performing downlink synchronization with the base station or accessing the base station, the UE receives configuration information of the base station, where the configuration information of the base station includes configuration information such as a time/frequency position of a data signal and a bandwidth.

The configuration information may be configured by using system information or terminal-specific radio resource control (radio resource control, RRC) information, or may be predefined in a protocol.

For example, time information of uplink communication is configured. There may be the following information:

```
        PUSCH-ConfigCommon ::=                    SEQUENCE {// PUSCH cell
common configuration
        pusch-TimeDomainAllocationList            //time  domain  resource  allocation
PUSCH-TimeDomainResourceAllocationList            OPTIONAL,    -- Need R

        ...
    }
    PUSCH-TimeDomainResourceAllocationList ::=    SEQUENCE
    (SIZE(1..maxNrofUL-Allocations)) OF PUSCH-TimeDomainResourceAllocation
    PUSCH-TimeDomainResourceAllocation ::=    SEQUENCE {
        k2 //parameter of time between DCI and a PUSCH scheduled by the DCI
INTEGER(0..32)
        OPTIONAL,    -- Need S
        mappingType      ENUMERATED {typeA, typeB},//mapping type, can be used
to determine a start OFDM symbol position of a data signal in a slot
        startSymbolAndLength        INTEGER (0..127) //start symbol and length (start
and length indicator, SLIV), cannot cross a slot boundary
    }
```

[0077] Alternatively, there may be the following information:

```
        PUSCH-TimeDomainResourceAllocationList-r16        ::=            SEQUENCE
(SIZE(1..maxNrofUL-Allocations-r16)) OF PUSCH-TimeDomainResourceAllocation-r16
        PUSCH-TimeDomainResourceAllocation-r16 ::=    SEQUENCE {
        k2-r16 //parameter of time between DCI and a PUSCH scheduled by the DCI
INTEGER(0..32)            OPTIONAL,    -- Need S
        puschAllocationList-r16                        SEQUENCE
(SIZE(1..maxNrofMultiplePUSCHs-r16)) OF PUSCH-Allocation-r16,
        ...
    }
    PUSCH-Allocation-r16 ::=    SEQUENCE {
        mappingType-r16                        ENUMERATED {typeA,
```

typeB}         OPTIONAL,    -- Cond NotFormat01-02-Or-TypeA

startSymbolAndLength-r16    INTEGER (0..127) OPTIONAL,    -- Cond NotFormat01-02-Or-TypeA

startSymbol-r16 //PUSCH start time (OFDM symbol position in a slot) INTEGER (0..13)    OPTIONAL,    -- Cond RepTypeB

length-r16 //PUSCH time length (OFDM symbol quantity) INTEGER (1..14)    OPTIONAL,    -- Cond RepTypeB

numberOfRepetitions-r16    ENUMERATED {n1, n2, n3, n4, n7, n8, n12, n16} OPTIONAL,    -- Cond Format01-02//quantity of repetitions

...

}

A start OFDM symbol position S of a PUSCH in a slot and a quantity L of OFDM symbols in the slot may be obtained by using a startSymbolAndLength (SLIV) field configured in an RRC message. Specifically, refer to the following manner for determining: If$(L-1) \leq 7$, SLIV = $14 \cdot (L-1) + S$; otherwise, SLIV = $14 (14-L+1) + (14-1-S)$. A value range of L is $0 \leq L \leq 14-S$.

For example, the time information of uplink communication is predefined in a protocol. Table 1b shows time domain resource allocation of a default PUSCH with respect to a normal cyclic prefix.

**Table 1b**

| Row index //row index | PUSCH mapping type //PUSCH mapping type, where different types correspond to different resource mapping constraints | $K_2$ //slot offset between DCI and a PUSCH | S //start OFDM symbol position of a PUSCH in a slot | L //quantity of OFDM symbols of a PUSCH in a slot |
|---|---|---|---|---|
| 1 | Type A | j | 0 | 14 |
| 2 | Type A | j | 0 | 12 |
| 3 | Type A | j | 0 | 10 |
| 4 | Type B | j | 2 | 10 |
| 5 | Type B | j | 4 | 10 |
| 6 | Type B | j | 4 | 8 |
| 7 | Type B | j | 4 | 6 |
| 8 | Type A | j+1 | 0 | 14 |
| 9 | Type A | j+1 | 0 | 12 |
| 10 | Type A | j+1 | 0 | 10 |
| 11 | Type A | j+2 | 0 | 14 |
| 12 | Type A | j+2 | 0 | 12 |
| 13 | Type A | j+2 | 0 | 10 |
| 14 | Type B | j | 8 | 6 |
| 15 | Type A | j+3 | 0 | 14 |
| 16 | Type A | j+3 | 0 | 10 |

P101: The base station sends an uplink grant (uplink grant) to the UE.

The uplink grant may be specified by using downlink control information (downlink control information, DCI) or radio resource control (radio resource control, RRC) information.

It should be understood that the uplink grant indicates scheduling information such as a time resource, a frequency domain resource, a modulation and coding scheme (modulation coding scheme, MCS) index, and a quantity of transport layers (or a quantity of mapping layers of a transport block) of data. Based on the scheduling information, the base station and the terminal may correspondingly send or receive data. In addition, with reference to the protocol 38.212, frequency domain resource scheduling information may be indicated by using a frequency domain resource assignment field (Frequency domain resource assignment) in the DCI. Time domain resource scheduling information may further indicate a specific configured value in RRC or a value in a predefined table in a protocol by using a time domain resource assignment field (Time domain resource assignment) in the DCI.

P102: The UE sends data to the base station, that is, performs uplink data transmission (PUSCH transmission).

P103: The base station feeds back, to the UE, confirmation about whether the data is successfully received, and feeds back an acknowledgment (acknowledge, ACK) character if the data is successfully received, or feeds back a negative acknowledgment (not acknowledge, NACK) character if the data is not successfully received.

As shown in (b) in FIG. 1, the downlink communication process includes the following steps.

P200: After performing downlink synchronization with the base station or accessing the base station, the UE receives configuration information of the base station, where the configuration information of the base station includes configuration information such as a time/frequency position of a data signal and a bandwidth.

The configuration information may be configured by using system information or terminal-specific radio resource control (radio resource control, RRC) information, or may be predefined in a protocol.

For example, time information of downlink communication is configured. There may be the following information:

```
PDSCH-ConfigCommon ::=    SEQUENCE {// PDSCH cell common configuration
       pdsch-TimeDomainAllocationList      //time  domain  resource  allocation
PDSCH-TimeDomainResourceAllocationList           OPTIONAL,    -- Need R

       ...

       }
       PDSCH-TimeDomainResourceAllocationList          ::=          SEQUENCE
(SIZE(1..maxNrofDL-Allocations)) OF PDSCH-TimeDomainResourceAllocation


       PDSCH-TimeDomainResourceAllocation  ::=      SEQUENCE  {//time  domain
resource allocation
       k0      //slot  interval  between  DCI  and  a  PDSCH         INTEGER(0..32)
OPTIONAL,    -- Need S
       mappingType   ENUMERATED {typeA, typeB}, //mapping type, can be used to
determine a start OFDM symbol position of a data signal in a slot
       startSymbolAndLength     INTEGER (0..127) //start symbol and length (start and
length indicator, SLIV), cannot cross a slot boundary
       }
```

[0089]    Alternatively, there may be the following information:

```
       PDSCH-TimeDomainResourceAllocationList-r16        ::=          SEQUENCE
(SIZE(1..maxNrofDL-Allocations)) OF PDSCH-TimeDomainResourceAllocation-r16
       PDSCH-TimeDomainResourceAllocation-r16 ::=   SEQUENCE {
       k0-r16                                         INTEGER(0..32)
OPTIONAL,    -- Need S
       mappingType-r16                             ENUMERATED {typeA,
typeB},


       startSymbolAndLength-r16                    INTEGER (0..127),
       repetitionNumber-r16             //repetition              quantity
ENUMERATED  {n2, n3, n4, n5, n6, n7, n8, n16}              OPTIONAL,    -- Cond
Formats1-0and1-1

       ...

       }
```

A start OFDM symbol position S of a PDSCH in a slot and a quantity L of OFDM symbols in the slot may be obtained by using a startSymbolAndLength (SLIV) field configured in an RRC message. Specifically, refer to the following manner for determining: If (L-1) ≤ 7, SLIV = 14·(L-1) + S; otherwise, SLIV = 14 (14-L+1) + (14-1-S). A value range of L is 0 ≤ L ≤ 14-S.

For example, the time information of uplink communication is predefined in a protocol. Table 2 shows time domain resource allocation of a default PDSCH with respect to a normal cyclic prefix.

**Table 2**

| Row index //row index | dmrs-TypeA-Position // PDSCH DMRS position | PDSCH mapping type //PDSCH mapping type, where different types correspond to different resource mapping constraints | K0 //slot offset between DCI and a PDSCH | S //start OFDM symbol position of a PDSCH in a slot | L //quantity of OFDM symbols of a PDSCH in a slot |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2, 3 | Type B | 0 | 5 | 7 |
| 9 | 2, 3 | Type B | 0 | 5 | 2 |
| 10 | 2, 3 | Type B | 0 | 9 | 2 |
| 11 | 2, 3 | Type B | 0 | 12 | 2 |
| 12 | 2, 3 | Type A | 0 | 1 | 13 |
| 13 | 2, 3 | Type A | 0 | 1 | 6 |
| 14 | 2, 3 | Type A | 0 | 2 | 4 |
| 15 | 2, 3 | Type B | 0 | 4 | 7 |
| 16 | 2, 3 | Type B | 0 | 8 | 4 |

P201: The base station sends a downlink grant (downlink grant) to the UE.

The downlink grant may be specified by using downlink control information (downlink control information, DCI) or radio resource control (radio resource control, RRC) information.

It should be understood that the downlink grant indicates scheduling information such as a time resource, a frequency domain resource, a modulation and coding scheme (modulation coding scheme, MCS), and a quantity of transport layers (or a quantity of mapping layers of a transport block) of data. Based on the scheduling information, the base station and the terminal may correspondingly send or receive data. In addition, with reference to the protocol 38.212, frequency domain resource scheduling information may be indicated by using a frequency domain resource assignment field (Frequency domain resource assignment) in the DCI. Time domain resource scheduling information may further indicate a specific configured value in RRC or a value in a predefined table in a protocol by using a time domain resource assignment field (Time domain resource assignment) in the DCI.

P202: The base station sends data to the UE, that is, performs downlink data transmission (PDSCH transmission).

P203: The UE feeds back, to the base station, confirmation about whether the data is successfully received, and feeds back an acknowledgment (acknowledge, ACK) character if the data is successfully received, or feeds back a negative acknowledgment (not acknowledge, NACK) character if the data is not successfully received.

(8) Channel coding

In an uplink communication process or a downlink communication process, channel coding is performed on data to ensure data transmission reliability and spectral efficiency. For example, PUSCH-based uplink data communication may relate to a message 3 in a random access process, or other uplink data or messages carried on a PUSCH. After a process such as channel coding is performed on these messages at a physical layer, the messages correspondingly become physical signals, and the signals are sent from a transmit antenna at a transmit end. A corresponding reverse process is performed at a receive end to restore, so as to implement communication. For example, a channel coding manner may be low density parity check (low density parity check, LDPC) coding.

Data sent from a medium access control (medium access control, MAC) layer to the physical layer is organized in a form of a transport block (Transport Block, TB). One TB corresponds to one data block including a medium access control protocol data unit (Medium access control Protocol data unit, MAC PDU). The transport block may be data in uplink communication (for example, sent by UE to a base station), and is carried by an uplink shared channel (uplink shared channel, UL-SCH), for example, a PUSCH; or may be data in downlink communication (for example, sent by a base station to UE), and is carried by a downlink shared channel (downlink shared channel, DL-SCH), for example, a PDSCH. At the MAC layer, one transport block may usually include a plurality of protocol data units. At the physical layer, one transport block is further processed into one or more code blocks (code block) through channel coding. A code block is a unit for performing channel coding on data. To be specific, channel coding and rate matching (and interleaving) are performed on bits of one code block together.

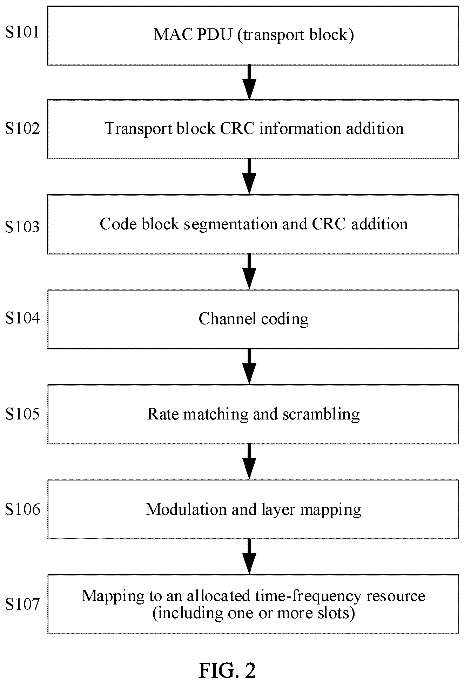

After cyclic redundancy check (cyclic redundancy check, CRC) insertion and code block (code block) segmentation are performed on a transport block, and CRC insertion, channel coding, and rate matching are performed on each code block, an obtained data bitstream may be referred to as a codeword. One codeword corresponds to one transport block, and the codeword may also be understood as a transport block with error protection. One codeword is further split into one or more code blocks. FIG. 2 shows a physical layer data processing process, which is applicable to the foregoing uplink communication, and may be performed by a terminal device serving as a transmit end; or may be applicable to the foregoing downlink communication, and may be performed by a network device serving as a transmit end. The process mainly includes the following steps.

S101: Send a higher layer data packet (MAC PDU), or referred to as a transport block, to a physical layer.

S102: Add (attach) cyclic redundancy check (cyclic redundancy check, CRC) information to the transport block at the physical layer, to generate a second transport block. For example, if a length of the transport block is A bits, and L is denoted as a quantity of CRC check bits, a length of the second transport block is B=A+L. If A>3824, L' = 24; otherwise, L = 16.

S103: Perform block segmentation on the second transport block by using the physical layer, to obtain C code blocks 1, where C is a positive integer, for example, C=1 or C>1.

Optionally, whether to add CRC information to the plurality of code blocks is determined based on a value of C. When C=1, because the code block is equivalent to the original transport block, UE does not need to add CRC information to the code block 1 obtained through block segmentation on the second transport block. When C is greater than 1, the UE may add CRC information to the C code blocks.

S104: Separately perform channel coding on the C code blocks 1, to generate C code blocks 2.

S105: Perform rate matching (rate matching) or scrambling (scrambling) on the C code blocks 2, to generate C code blocks 3.

S106: Perform modulation and layer mapping on the C code blocks 3.

S107: Map code blocks 3 obtained through modulation and layer mapping to an allocated time-frequency resource, to implement uplink data transmission or downlink data transmission. For example, the UE sends a PUSCH to a base station, the PUSCH may be carried on the time-frequency resource to which the code block 3 is mapped, and the PUSCH includes the code block 3. For another example, the base station sends a PDSCH to the UE, the PDSCH may be carried on the time-frequency resource to which the code block 3 is mapped, and the PUSCH includes the code block 3. In uplink communication, the time-frequency resource is related to the time domain resource and the frequency domain resource scheduled by the uplink grant in P101. Alternatively, in downlink communication, the time-frequency resource is related to the time domain resource and the frequency domain resource scheduled by the downlink grant in P201.

A size E (or referred to as $K_r$, where $r = 0,1, ..., C - 1$) of some code blocks 3 satisfies the following formula:

$$E = N_L \cdot Q_m \cdot \left\lfloor \frac{G}{N_L \cdot Q_m \cdot C} \right\rfloor$$ . If $\frac{G}{N_L \cdot Q_m \cdot C}$ is not an integer, the size E of the some code blocks satisfies the following formula: $$E = N_L \cdot Q_m \cdot \left\lceil \frac{G}{N_L \cdot Q_m \cdot C} \right\rceil$$ , where $\lceil \cdot \rceil$ represents rounding up.

Herein, $G$ represents a total quantity of bits after the transport block is coded, $G = N_L \cdot Q_m \cdot N_{RE}$, $N_L$ is a quantity of mapping layers of the transport block, $Q_m$ is a modulation order, and $N_{RE}$ is a quantity of resource elements (resource element, RE) to which the transport block is mapped. C is a quantity of code blocks 1 or code blocks 2.

In addition, if a transport block is coded into code blocks of a plurality of redundancy versions, the code blocks of the different redundancy versions may be transmitted during repeated transmission or retransmission.

Channel coding in uplink communication or downlink communication relates to determining of a transport block size (transport block size, TBS), a code block length, and a quantity of code blocks. It should be understood that a receive end performs a reverse operation of the foregoing process, to restore the transport block. The following describes a manner used in the conventional technology.

In the conventional technology, the size of the transport block in S101 may be determined based on a time domain resource, a frequency domain resource, a modulation and coding scheme, and a quantity of transport layers (and/or a quantity of ports, denoted as $N_L$) indicated in an uplink grant or a downlink grant.

The modulation and coding scheme indicated in the uplink grant or the downlink grant may be MCS index information. The MCS index information indicates information such as a modulation order Qm, a target code rate R, and spectral efficiency. For example, the uplink grant may indicate an MCS index table of a PUSCH based on change precoding and 64QAM in Table 3 or Table 4, or a row in an MCS index table that may be used as a PUSCH in Table 5. For another example, the downlink grant may indicate a row in an MCS index table that may be used as a PDSCH in any one of Table 5 to Table 7.

In the conventional technology, when a higher layer parameter mcs-Table is set to 'qam256', Table 6 is used to determine a modulation and coding scheme. When a higher layer parameter mcs-Table is set to 'qam64LowSE', Table 4 (uplink communication) or Table 7 (downlink communication) is used to determine a modulation and coding scheme. Otherwise, Table 3 (uplink communication and based on discrete Fourier transform-spread-OFDM, that is, DFT-s-OFDM) or Table 5 (downlink communication or uplink communication and based on OFDM) is used to determine a modulation and coding scheme.

**Table 3**

| MCS index MCS Index IMCS | Modulation order Modulation Order Qm | Target code rate Target code Rate R × 1024 | Spectral efficiency Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |

(continued)

| MCS index MCS Index IMCS | Modulation order Modulation Order Qm | Target code rate Target code Rate R × 1024 | Spectral efficiency Spectral efficiency |
|---|---|---|---|
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved (reserved) | |
| 29 | 2 | Reserved | |
| 30 | 4 | Reserved | |
| 31 | 6 | Reserved | |

**Table 4**

| MCS index MCS Index IMCS | Modulation order Modulation Order Qm | Target code rate Target code Rate R × 1024 | Spectral efficiency Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |

(continued)

| MCS index MCS Index IMCS | Modulation order Modulation Order Qm | Target code rate Target code Rate R × 1024 | Spectral efficiency Spectral efficiency |
|---|---|---|---|
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved (reserved) | |
| 29 | 2 | Reserved | |
| 30 | 4 | Reserved | |
| 31 | 6 | Reserved | |

**Table 5**

| MCS index MCS Index IMCS | Modulation order Modulation Order Qm | Target code rate Target code Rate R × 1024 | Spectral efficiency Spectral Efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |

(continued)

| MCS index MCS Index IMCS | Modulation order Modulation Order Qm | Target code rate Target code Rate R × 1024 | Spectral efficiency Spectral Efficiency |
|---|---|---|---|
| 17 | 6 | 438 | 2.5664 |
| MCS index MCS Index IMCS | Modulation order Modulation Order Qm | Target code rate Target code Rate R × 1024 | Spectral efficiency Spectral Efficiency |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved | |
| 31 | 6 | Reserved | |

**Table 6**

| MCS index MCS Index IMCS | Modulation order Modulation Order Qm | Target code rate Target code Rate R × [1024] | Spectral efficiency Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |

(continued)

| MCS index MCS Index IMCS | Modulation order Modulation Order Qm | Target code rate Target code Rate R × [1024] | Spectral efficiency Spectral efficiency |
|---|---|---|---|
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved (reserved) | |
| 29 | 4 | Reserved | |
| 30 | 6 | Reserved | |
| 31 | 8 | Reserved | |

**Table 7**

| MCS index MCS Index IMCS | Modulation order Modulation Order Qm | Target code rate Target code Rate R × [1024] | Spectral efficiency Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |

(continued)

| MCS index MCS Index IMCS | Modulation order Modulation Order Qm | Target code rate Target code Rate R × [1024] | Spectral efficiency Spectral efficiency |
|---|---|---|---|
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved (reserved) | |
| 30 | 4 | Reserved | |
| 31 | 6 | Reserved | |

The following further describes, by using step a1 to step e1, a manner for determining a size of the transport block in S101 in the related technology.

Step a1: Determine an unquantized intermediate variable $N_{info}$, where $N_{info} = N_L \cdot R \cdot Qm \cdot N_{RE}$.

Herein, $N_L$ is a quantity (represented by a symbol $\nu$ in a protocol) of mapping layers of the transport block, $\nu$ is a quantity of resource elements (resource element, RE) to which the transport block is mapped, $R$ is a target code rate, and $Q_m$ is a modulation order. $N_{RE}$ is determined in the following manner.

First, $N'_{RE,k}$ is determined. $N'_{RE,k}$ may be understood as a quantity of REs allocated to a PUSCH or a PDSCH in each PRB (whose index is denoted as k) in scheduled time. $N'_{RE,K} = \dfrac{N_{SC}^{RB} \cdot N_{symb}^{sh} - N_{DMRS}^{PRB} - N_{oh}^{PRB}}{}$ . A value of $N_{SC}^{RB}$ is a fixed value, and may represent a quantity of subcarriers included in one PRB in frequency domain. Generally, $N_{SC}^{RB} = 12$. $N_{symb}^{sh}$ represents a quantity of scheduled OFDM symbols in each RB (or RBG) in one slot ($N_{symb}^{sh}$ is the number of symbols of the PDSCH allocation within the slot). $N_{DMRS}^{PRB}$ represents a quantity of REs for a DMRS in each PRB in one slot ($N_{DMRS}^{PRB}$ is the number of REs for DM-RS per PRB in the scheduled duration including the overhead of the DM-RS CDM groups without data). $N_{oh}^{PRB}$ represents a quantity of overheads in each RB (or RBG) in one slot ($N_{oh}^{PRB}$ is the overhead configured by higher layer parameter xOverhead in PDSCH-Serving-CellConfig. If the xOverhead in PDSCH-ServingCellconfig is not configured (a value from 0, 6, 12, or 18), the $N_{oh}^{PRB}$ is set to 0), for example, a quantity of overheads used for reference signal CSI-RS transmission. For details, refer to descriptions in the protocol TS 38.214.

Then, a quantity of allocated resource elements is determined as $N_{RE} = \min(156, N'_{RE}) \cdot n_{PRB}$, where $n_{PRB}$ is a quantity of scheduled resource blocks (AUE determines the total number of REs allocated for PDSCH ($N_{RE}$) by $N_{RE} = \min(156, N'_{RE}) \cdot n_{PRB}$, where nPRB is the total number of allocated PRBs for the UE).

Step b1: Determine a quantized intermediate variable $N'_{info}$ (quantized intermediate number of information bits) based on the unquantized intermediate variable $N_{info}$ (Unquantized intermediate variable ($N_{info}$) is obtained by $N_{info}$ = $N_{RE} \cdot R \cdot Q_m \cdot v$).

It should be noted that for different values of $N_{info}$, methods for determining the first TBS by the UE may be different.

For example, when $N_{info} \leq 3824$, the UE determines a value of the transport block size according to the following step c and step d (denoted as case 1). When $N_{info} > 3824$, the UE determines a value of the transport block size according to the following step e and step f (denoted as case 2). The following separately describes in detail case 1 and case 2.

Case 1: $N_{info} \leq 3824$

In case 1, the UE determines the value of the transport block size according to the following step c and step d.

Step c1: The UE determines $$N'_{info} = max\left(24, 2^n \times \left\lfloor \frac{N_{info}}{2^n} \right\rfloor\right)$$ . Herein, $n$ = $$max\left(3, \left\lfloor log_2(N_{info}) \right\rfloor - 6\right)$$ .

Step d1: The UE may query, according to transport block size values recorded in Table 8, a maximum value that is not greater than $N'_{info}$, and use the maximum value as the value of the transport block size. For example, if $N'_{info}$ determined according to the foregoing formula is 1200, it can be learned by querying Table 8 that a maximum value that is not greater than 1200 is 1192. In this case, the transport block size is 1192 bits (bit). Table 8 is used as an example to show a correspondence between an index and a transport block size.

**Table 8**

| Index (Index) | Transport block size (TBS) | Index | TBS | Index | TBS | Index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |

(continued)

| Index (Index) | Transport block size (TBS) | Index | TBS | Index | TBS | Index | TBS |
|---|---|---|---|---|---|---|---|
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Case 2: $N_{info} > 3824$

Step e1: Determine $N'_{info} = max\left(3840, 2^n \times round\left(\frac{N_{info}-24}{2^n}\right)\right)$. Herein, $n = \lfloor log_2(N_{info} - 24)\rfloor - 5$.

Step f1: Determine the value (which may be denoted as A described in S102 or TBS) of the transport block size based on the target code rate R and $N'_{info}$.

If $R \le \frac{1}{4}$, $TBS = 8 \times C' \times \left\lceil \frac{N'_{info}+24}{8 \times C'}\right\rceil - 24$. Herein, $C' = \left\lceil \frac{N'_{info}+24}{3816}\right\rceil$.

If $R > \frac{1}{4}$ and $N'_{info} > 8424$, $TBS = 8 \times C' \times \left\lceil \frac{N'_{info}+24}{8 \times C'}\right\rceil - 24$. Herein, $C' = \left\lceil \frac{N'_{info}+24}{8424}\right\rceil$.

If $R > \frac{1}{4}$ and $N'_{info} \le 8424$, $TBS = 8 \times \left\lceil \frac{N'_{info}+24}{8}\right\rceil - 24$.

It should be noted that "C'" is a variable for temporarily determining a code block size.

The following further describes a manner for determining the quantity of code blocks in S103 in a related technology.

First, a channel coding LDPC base graph (LDPC base graph) needs to be determined. For example, in an existing 5G protocol, there are two types of base graphs: a base graph 1 and a base graph 2, which respectively correspond to different channel coding parameters. A method for determining a base graph is as follows: When the transport block size is $A \le 292$, or when the transport block size is $A \le 3824$ and the target code rate is $R \le 0.67$, or when the target code rate is $R \le 0.25$, the base graph 2 is used; otherwise, the base graph 1 is used.

Then, a quantity C of code blocks obtained by segmenting a transport block may be determined based on a selected base graph and a length B of a second transport block. For the base graph 1, a maximum code block length is $K_{cb} = 8448$; and for the base graph 2, a maximum code block length is $K_{cb} = 3840$.

When the length B of the second code block satisfies $B \le K_{cb}$, the quantity of code blocks is C=1; otherwise, the quantity of code blocks is $C = \lceil B/(K_{cb} - L)\rceil$, where $L = 24$. Correspondingly, the finally obtained size B of the second code block ($B = A + L$, that is, the transport block size A plus a cyclic redundancy check length L) is exactly divided by C (that is, is an integer multiple of C). In addition, in S103, a size of each code block 1 before CRC addition is $K = B/C$, and a size of each code block 1 after CRC addition is $K' = B'C + L$ or $K' = B'/C$, where $B' = B + CL$.

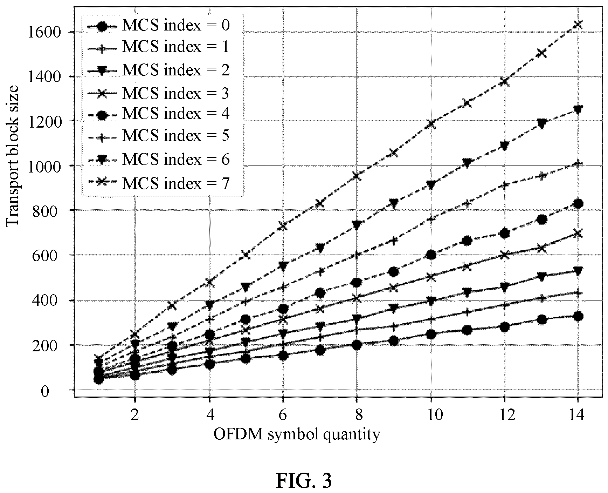

A coding gain is related to a code block length. For example, a longer code block length indicates a higher coding gain, and a shorter code block length indicates a lower coding gain. However, the code block length is limited by a transport block size. It can be learned from the foregoing steps a to e that, in the related technology, a transport block is usually mapped to a single slot for transmission, or a single redundancy version obtained through channel coding on a transport block is sent by using one slot. In a coverage-limited scenario, if a bandwidth scheduled for a terminal is low and an MCS is low, a data block that can be transmitted is small, and a total coding gain is reduced. FIG. 3 shows a correspondence between a transport block size and a quantity of schedulable symbols. A maximum of 14 OFDM symbols used to transmit data are scheduled in one slot. In a typical case of a transmission bandwidth of 32 resource blocks (resource block, RB), a maximum of one transport block is less than 1750 bits, and is far less than the maximum code block length 3824 corresponding to the base graph 2 and far less than the maximum code block length 8448 corresponding to the base graph 1. Consequently, a channel coding gain is low, more CRC overheads are introduced, and transmission performance optimization space is limited.

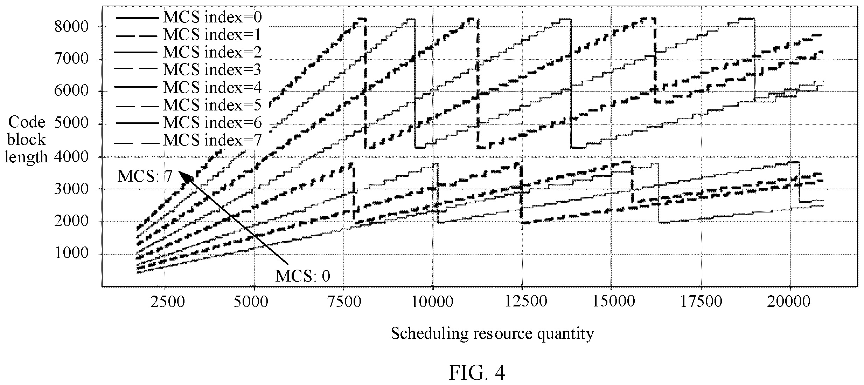

In addition, according to the foregoing steps a1 to e1, the code block length K is related to a (nominal or actual) total quantity (that is, $N_{RE}$) of resources to which the transport block is mapped and a modulation and coding scheme indicated by the MCS index. A code block length K corresponding to a same MCS index gradually increases with $N_{RE}$, but a turning point occurs in a specific case. FIG. 4 is a schematic diagram of a relationship between a code block length and a quantity of mapped resources (or referred to as a quantity $N_{RE}$ of mapped resource elements). When a quantity of transport layers is 1, in modulation and coding schemes indicated by different MCS indices, K gradually increases with $N_{RE}$ to a specific extent, then a turning point occurs, and K decreases while $N_{RE}$ increases, which is a quick jump. These turning points mean an increase in a quantity of code blocks, resulting in a decrease in a length of a single code block. Consequently, a channel coding gain decreases, and more CRC overheads are introduced. Such a decrease often causes performance deterioration. According to an existing protocol, the foregoing $N_{RE}$ is related to scheduling of a bandwidth and a time domain resource (a quantity of OFDM symbols) by a base station in a configuration process or an uplink/downlink grant process. However, in a case of poor coverage, a quantity of resources that need to be scheduled is usually small, thereby forming high frequency domain power density and high detection performance. In this case, a time domain OFDM symbol is limited, and consequently a code block length cannot reach an ideal value.

Based on the foregoing problem in the conventional technology, this application provides a data transmission method and apparatus. A quantity of resources to which a transport block can be mapped is adjusted for different MCSs, to determine a transport block size, a code block length, and the like, thereby improving a channel coding gain, reducing CRC overheads, and improving communication performance.

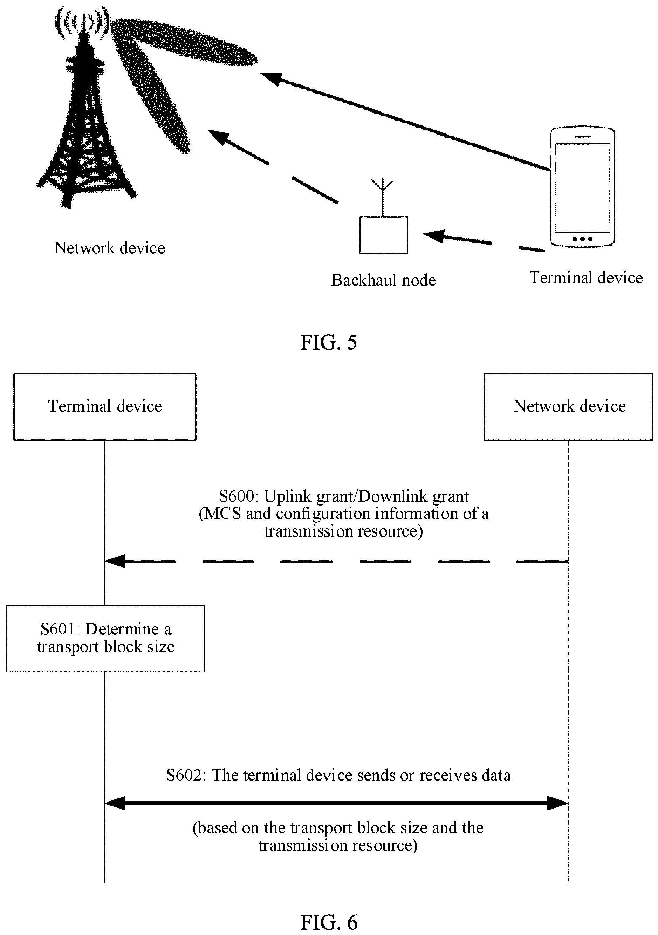

The data transmission method provided in embodiments of this application may be applied to a communication system architecture shown in FIG. 5. The communication system includes a network device and a terminal device. Optionally, the communication system may further include a backhaul node. The backhaul node may communicate with the network device, and may communicate with the terminal device. When the backhaul node performs transmission to the network device, the backhaul node may be considered as a terminal device and accesses the network device. When the backhaul node performs transmission to the terminal device, the backhaul node may be considered as a network device and provides a relay service for the terminal device, and the terminal device may access the network device through the backhaul node.

The following describes the data transmission method in embodiments of this application in detail with reference to solution 1 to solution 4. Embodiments of this application are mainly described from a perspective of a transmit end. It should be understood that a receive end performs a reverse operation process in a similar manner, so that data is received.

Solution 1: An embodiment of this application provides a data transmission method. The method may be applied to the foregoing network device or terminal device, to implement a data processing process related to channel coding in uplink communication or downlink communication.

For example, FIG. 6 mainly focuses on an operation performed on a terminal device side, and mainly includes the following steps.

S601: A terminal device determines a transport block size.

Optionally, the transport block size is related to a first parameter, or the transport block size is determined by a first parameter. The first parameter includes at least one of the following: a modulation and coding scheme, configuration information of a transmission resource, a quantity $N_{RE}$ of resources to which a transport block is mapped, a quantized intermediate value $N'_{info}$, a transport block size TBS, and a channel-coded code block length $K$.

The first parameter is related to a second parameter, and the second parameter includes at least one of the following: an upper limit value $N_{RE}^{Th}$ of the quantity of resources to which the transport block is mapped, an upper limit value $T_{tb}^{Th}$ of the transport block size, an upper limit value $N'^{Th}_{info}$ of the intermediate quantized value, and an upper limit value $K^{Th}$ of a channel-coded code block length. It should be noted that, an upper limit value of a related parameter may also be referred to as a nominal value, a reference value, a preset constant, or a constant indicated by configuration information. For a name, for example, the upper limit value of the quantity of resources to which the transport block is mapped may also be referred to as a nominal value of the quantity of resources to which the transport block is mapped; the upper limit value of the transport block size may also be referred to as a nominal value of the transport block size;

the upper limit value of the quantized intermediate value may also be referred to as a first nominal quantized intermediate value; and the upper limit value of the channel-coded code block length may also be referred to as a nominal code block length.

Optionally, the terminal device may determine the transport block size in the following manner: The terminal device obtains the modulation and coding scheme, the configuration information of the transmission resource, and the second parameter; the terminal device determines the first parameter based on the modulation and coding scheme, the configuration information of the transmission resource, and the second parameter; and the terminal device determines the transport block size based on the first parameter.

Optionally, the second parameter may be set in a predefined manner. For example, second parameters associated with different MCSs may be set, and the MCS index tables shown in Table 3 to Table 7 may be extended, to record the upper limit values of the foregoing related parameters in the tables. A solution of adding and recording an upper limit value of a related parameter in an MCS index table is described in solution 2. Optionally, a second parameter associated with an MCS may be determined based on a quantity of resource elements corresponding to a turning point corresponding to the MCS in FIG. 4. For example, if an obtained modulation and coding scheme is a modulation and coding scheme indicated by an MCS index 0, the upper limit value $N_{RE}^{Th}$ of the quantity of resources to which the transport block is mapped may be set to a quantity that is of resources to which the transport block is mapped and that corresponds to a first turning point on a curve corresponding to the MCS index 0. Herein, $N_{RE}^{Th}$ may be an upper limit value of the quantity of resource elements that causes an increase in a quantity of code blocks of the transport block.

In other words, resource quantities $N_{RE}^{Th}$ and $NRE + 1$ correspond to different quantities of channel-coded code blocks (or different quantities of blocks divided from the transport block). Based on this, when obtaining the modulation and coding scheme, the terminal device may determine the second parameter by searching a table or based on the modulation and coding scheme. In addition, a specific configuration of the second parameter is described in solution 2.

Optionally, a manner in which the terminal device obtains the modulation and coding scheme may be as follows: The terminal device obtains an uplink grant or a downlink grant from a network device, where the uplink grant or the downlink grant includes indication information indicating the modulation and coding scheme. For example, the terminal device receives DCI from the network device. The DCI includes an MCS index of the modulation and coding scheme. If the DCI is used for uplink grant scheduling, the MCS index included in the DCI may be an MCS index in a row in Table 3, Table 4, or Table 5. If the DCI is used for downlink grant scheduling, the MCS index included in the DCI may be an MCS index in a row in Table 5, Table 6, or Table 7. Parameters of the modulation and coding scheme include a target code rate R, a modulation order $Q_m$, and the like corresponding to the MCS index.

Optionally, a manner in which the terminal device obtains the configuration information of the transmission resource may be as follows: The transmission resource may be a time domain resource or a frequency domain resource indicated by the network device in an uplink grant or a downlink grant (or an RRC message, or a medium access control-control element (medium access control-control element, MAC-CE) message). The transmission resource may include one or more slots.

Optionally, the configuration information of the transmission resource includes at least one of the following configuration information: time domain resource allocation information, frequency domain resource allocation information, a mapping type, a bandwidth, and the like. Optionally, the configuration information includes but is not limited to the configuration information in P100/P101 or P200/P201.

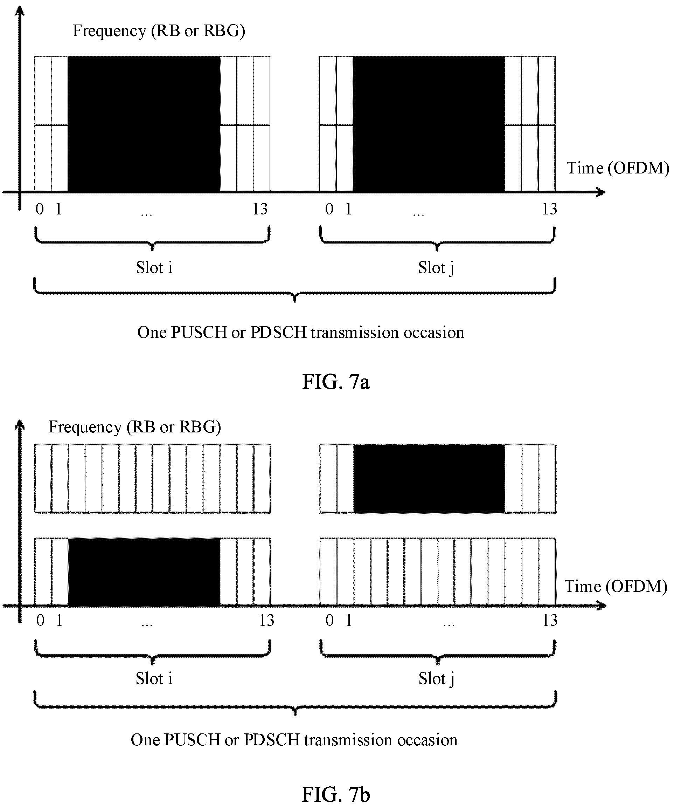

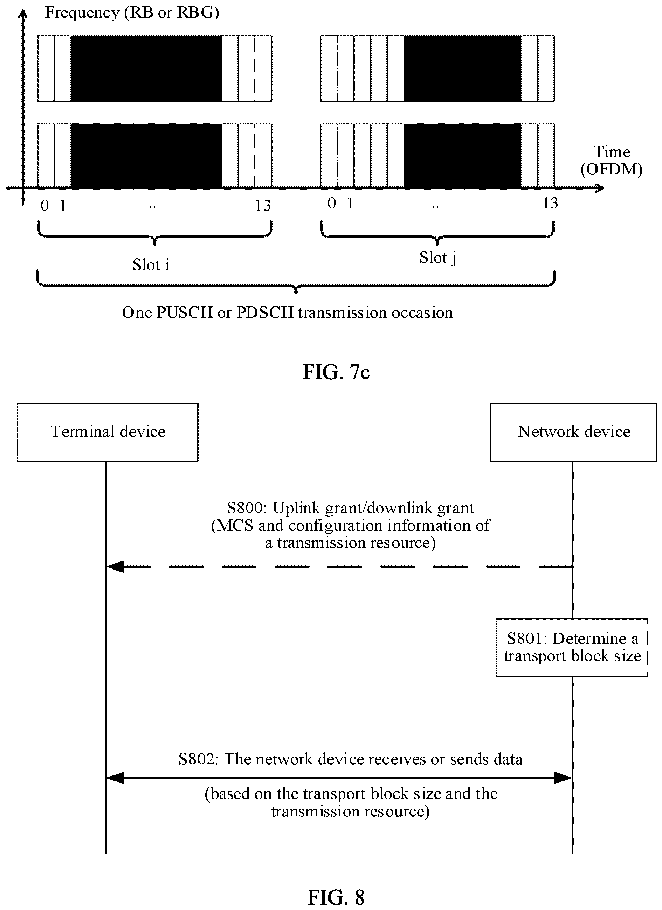

For example, before S601, FIG. 6 further shows step S600: The network device sends an uplink grant/downlink grant to the terminal device, where the uplink grant/downlink grant carries an MCS and the configuration information of the transmission resource. A dashed line indicates that S600 is an optional step. In addition, when the transmission resource includes a plurality of slots, for time domain resources and frequency domain resources allocated by using the uplink grant or the downlink grant, as shown in FIG. 7a, time domain resource allocations and frequency domain resource allocations in different slots may be the same. Alternatively, as shown in FIG. 7b, different slots have different frequency domain resources but a same time domain resource. Alternatively, as shown in FIG. 7c, different slots have different time domain resources but a same frequency domain resource. Alternatively, a combination of these examples may be further used. For example, different slots have different frequency domain resources and different time domain resources. For another example, in a same slot, a first part of time domain resources is allocated to a transport block, and a second part of time domain resources is allocated to another transport block.

Optionally, the network device may use indication/configuration information (for example, an uplink grant, a downlink grant, an RRC message, or a MAC-CE message) to carry at least one of the following parameters: a transport block mapping manner (that is, mapping a transport block to a single slot (TB processing over single-slot), or mapping a transport block to a plurality of slots (TB processing over multi-slot), or mapping a transport block to N slots (TB processing over N slots)), a quantity N of slots to which the transport block is mapped, a mapped OFDM start symbol S, a quantity L of consecutively mapped OFDM symbols, and a total quantity F of OFDM symbols to which the transport block is mapped. In this case, the terminal device may determine the transport block, the quantity of code blocks, the code block size, and the quantity N of slots based on one or more of the mapping manner, N, S, L, and F obtained from the indication information (for example, the uplink grant or the downlink grant). For example, the transport block, the quantity of code blocks, the code block size, and the quantity N of slots are determined based on at least one of N, S, L, and S+L. For example, the transport block, the quantity of code blocks, the code block size, and the quantity N of slots are determined based on at least one of S, L, and S+L.

In this embodiment of this application, a transmission manner in which the transport block is mapped to a plurality of slots or the transport block is mapped to N (N is greater than 1) slots may include but is not limited to the following manners: (1) Multi-slot is indicated if S and L satisfy the following condition: S+L>X, where X is an integer. For example, X is greater than a predefined value. For example, X>14. For another example, X>20. (2) The transport block, the quantity of code blocks, the code block size, and the quantity N of slots are determined based on F and a specified symbol position used to transmit the transport block, where F satisfies the following condition: F is greater than a predefined value. For example, F is greater than 12. For another example, F is greater than 14. For another example, F is greater than 20. It indicates that all F OFDM symbols used to transmit the transport block in the N slots jointly form one transmission occasion (transmission occasion). (3) The configuration information of the network device indicates that the transport block is mapped to N>1 slots. (4) A manner of determining the quantity N of slots may alternatively be determined in a manner in solution 4 or solution 5.

It should be noted that in this embodiment of this application, the transport block mapping manner may also be referred to as a transport block transmission manner. Mapping a transport block to a plurality of slots is also referred to as mapping a transport block to N slots, where N>1. Mapping a transport block to a plurality of slots means that the transport block is transmitted by using the plurality of slots. In addition, the transport block mapping manner may also be referred to as a transport block segmentation manner (that is, the transport block is segmented into a plurality of channel-coded code blocks). Optionally, for transport block segmentation, a quantity of blocks may not be limited, or a maximum quantity of blocks may be limited. It should be understood that these terms correspond to a same processing manner in this embodiment of this application.

In an implementation, the transport block mapping manner may be configured by using a time domain resource allocation field. Specifically, a mapping type mappingType may be used for indication. For example, a new candidate item is added to a mapping type mappingType field, and corresponding RRC signaling is:

```
PUSCH-TimeDomainResourceAllocation ::=   SEQUENCE {

      mappingType          ENUMERATED {typeA, typeB, typeC},//mapping type,
where typeC represents a quantity of slots to which the transport block is mapped

      …

      }

PDSCH-TimeDomainResourceAllocation   ::=        SEQUENCE  {//time domain
resource allocation

      mappingType          ENUMERATED {typeA, typeB, typeC},//mapping type,
where typeC represents a quantity of slots to which the transport block is mapped

      …

      }
```

Further, N, S, L, and F refer to a quantity of slots or OFDM symbols corresponding to a subcarrier spacing used for transmitting the indication information. Alternatively, further, N, S, L, and F refer to a quantity of slots or OFDM symbols corresponding to a subcarrier spacing used for transmitting the indication data. Alternatively, further, N, S, L, and F refer to a quantity of slots or OFDM symbols corresponding to a reference subcarrier spacing, and the reference subcarrier spacing is determined based on network configuration information.

Further, the second parameter may be used by the terminal device to determine a coding scheme of the transport block. For example, the terminal device may perform channel coding on the transport block based on the upper limit value of the channel-coded code block length and the transport block size, to obtain n channel-coded code blocks corresponding to the transport block, where a length of any one of the n channel-coded code blocks is less than or equal to the upper limit value of the channel-coded code block length, where n is a positive integer.

Optionally, a difference between the upper limit value of the transport block size and the upper limit value of the channel-coded code block length may be set to be greater than a specified threshold, and n is 1. A value of the specified threshold may be related to a quantity of bits of CRC information added to the transport block, and the threshold needs to be greater than or equal to a quantity of bits required by the CRC information. In this way, a relatively long code block length can be ensured. This helps improve a coding gain.

S602: The terminal device sends or receives data on the transmission resource based on the transport block size.

Optionally, the terminal device may send or receive data on the transmission resource based on the n channel-coded code blocks. For a manner of performing channel coding on the transport block, refer to S101 to S107. Details are not described in this embodiment of this application.

In this embodiment of this application, an upper limit value is set for a parameter that participates in determining the transport block size, to adjust the transport block size, so as to avoid a case in which a quantity of mapped resources is relatively large but a code block length is relatively small, and avoid a case in which the transport block is divided into more small code blocks, and consequently a channel coding gain is lost and more CRC overheads are introduced.

For example, FIG. 8 mainly focuses on an operation performed on a network device side, and mainly includes the following steps.

S801: A network device determines a transport block size.

The transport block size is related to a first parameter, or the transport block size is determined by a first parameter. The first parameter includes at least one of the following: a modulation and coding scheme, configuration information of a transmission resource, a quantity $N_{RE}$ of resources to which a transport block is mapped, a quantized intermediate value N'$_{info}$, a transport block size TBS, and a first channel-coded code block length $K$. The first parameter is related to a second parameter, and the second parameter includes at least one of the following: an upper limit value $NRE$ of the quantity of resources to which the transport block is mapped, an upper limit value $T_{tb}^{Th}$ of the transport block size, an upper limit value $N'^{Th}_{info}$ of the intermediate quantized value, and an upper limit value $K^{Th}$ of a channel-coded code block length.

Optionally, the network device may determine the transport block size in the following manner: The network device obtains the modulation and coding scheme, the configuration information of the transmission resource, and the second parameter; the network device determines the first parameter based on the modulation and coding scheme, the configuration information of the transmission resource, and the second parameter; and the terminal device determines the transport block size based on the first parameter.

For a manner in which the network device obtains the second parameter, refer to the manner in which the terminal device obtains the second parameter in S601. Details are not described in this embodiment of this application. The following mainly describes in detail a manner in which the network device obtains the modulation and coding scheme and the configuration information of the transmission resource.

Optionally, the network device may determine, based on a communication requirement between the network device and the terminal device, performance of the terminal device, and the like, a modulation and coding scheme and a transmission resource that are applicable to be scheduled (or configured or allocated) to the terminal device. Further, optionally, the network device may indicate the modulation and coding scheme and the configuration information of the transmission resource to the terminal device by using an uplink grant or a downlink grant. For a specific indication manner, refer to the implementation in which the terminal device obtains the modulation and coding scheme and the configuration information of the transmission resource in S601. Details are not described in this embodiment of this application. Similarly, for example, FIG. 8 further shows step S800: The network device sends an uplink grant/downlink grant to the terminal device, where the uplink grant/downlink grant carries an MCS and the configuration information of the transmission resource. A dashed line indicates that S800 is an optional step. It should be noted that S800 may be performed in parallel with S801, or may be performed before or after S801. This is not limited in this embodiment of this application. The downlink grant in step S800 may be used by the terminal device to decode received data, and the uplink grant in step S800 may be used by the terminal device to encode to-be-sent data.

Further, the second parameter may be used by the network device to determine a transport block coding scheme, for example, determine n channel-coded code blocks corresponding to the transport block, and a code block size. For an implementation in which the network device determines the transport block coding scheme, refer to the implementation in which the terminal device determines the transport block coding scheme in S601. Details are not described in this embodiment of this application.

S802: The network device receives or sends data on the transmission resource based on the transport block size.

Optionally, the network device may receive or send data on the transmission resource based on the n channel-coded code blocks. For a manner of performing channel coding on the transport block, refer to S101 to S107. Details are not described in this embodiment of this application.

In this embodiment of this application, an upper limit value is set for a parameter that participates in determining the transport block size, to adjust the transport block size, so as to avoid a case in which a quantity of mapped resources is relatively large but a code block length is relatively small, and avoid a case in which the transport block is divided into more small code blocks, and consequently a channel coding gain is lost and more CRC overheads are introduced.

Solution 2: For different modulation and coding schemes, a second parameter is set, that is, at least one second parameter has a correspondence with a modulation and coding scheme (or an MCS index). The second parameter may also be understood as an upper limit value (or referred to as a nominal value, a reference value, or another term) of a related parameter, to avoid a case in which a code block length jumps (decreases) and a coding gain decreases. The foregoing related parameter may include at least one of the following parameters: a transport block size TBS, a quantized intermediate value $N'_{info}$, a code block length K for channel coding, and a quantity $N_{RE}$ of resources to which a transport block is mapped.

An association relationship between an MCS index and an upper limit value of a related parameter may be shown in the following Table 9 to Table 13. Optionally, an uplink grant may indicate an MCS index in any one of Table 9 to Table 11, and a downlink grant may indicate an MCS in any one of Table 11 to Table 13. A terminal device may obtain, based on the MCS index indicated by the uplink grant or the downlink grant, other information in a row in which the MCS index is located, for example, one or more of a modulation order, a target code rate, an upper limit value $T_{tb}^{Th}$ of the transport block size, an upper limit value $N'^{Th}_{info}$ of the quantized intermediate value of a quantity of information bits, an upper limit value $K^{Th}$ of the code block length, an upper limit value $N_{RE}^{Th}$ of the quantity of resources to which the transport block is mapped, and a base graph; and specifically determine, based on a selected base graph, the modulation and coding scheme and first information associated with the modulation and coding scheme.

In an implementation, the upper limit value $T_{tb}^{Th}$ of the transport block size, the upper limit value $N'^{Th}_{info}$ of the quantized intermediate value of the quantity of information bits, and the upper limit value $K^{Th}$ of the code block length are related to the target code rate.

For example, when the target code rate is less than 308/1024 (that is, 0.30078125 or 0.3), the upper limit value $T_{tb}^{Th}$ of the transport block size is 3752; otherwise, the upper limit value $T_{tb}^{Th}$ of the transport block size is 8192.

For another example, when the target code rate is less than 308/1024 (that is, 0.30078125 or 0.3), the upper limit value $N'^{Th}_{info}$ of the quantized intermediate value of the quantity of information bits is 3808; otherwise, the upper limit value $N'^{Th}_{info}$ of the quantized intermediate value of the quantity of information bits is 8192.

For another example, when the target code rate is less than 308/1024 (that is, 0.30078125 or 0.3), the upper limit value $K^{Th}$ of the code block length is 3776; otherwise, the upper limit value $K^{Th}$ of the code block length is 8216.

In an implementation, at least one of the following is related to an MCS table: the upper limit value $T_{tb}^{Th}$ of the transport block size, the upper limit value $N'^{Th}_{info}$ of the quantized intermediate value of the quantity of information bits, the upper limit value $K^{Th}$ of the code block length, the upper limit value $N_{RE}^{Th}$ of the quantity of resources to which the transport block is mapped, and the base graph. A manner of selecting the MCS table may be the same as that in the conventional technology.

In addition, it should be noted that, for any one of the following Table 9 to Table 13, an association relationship between an MCS index and other information in a row in which the MCS index is located is not limited. In actual use, the other information may be one row or several rows shown in the table, all rows in the table, or more rows than those shown in the table. The other information associated with the MCS index may be one column or several columns shown in the table, all columns in the table, or more columns than those shown in the table. The following Table 9 to Table 13 are used as an example, and do not indicate that descriptions of the association between an MCS index and other information in this embodiment of this application are limited to this example.

**Table 9**

| MCS index MCS Index $I_{MCS}$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 0 | 2 | 120 | 3752 | 3808 | 3768 | 16315 | Base graph 2 |
| 1 | 2 | 157 | 3752 | 3808 | 3768 | 12470 | Base graph 2 |
| 2 | 2 | 193 | 3752 | 3808 | 3768 | 10144 | Base graph 2 |
| 3 | 2 | 251 | 3752 | 3808 | 3768 | 7800 | Base graph 2 |
| 4 | 2 | 308 | 8192 | 8192 | 8216 | 13870 | Base graph 1 |
| 5 | 2 | 379 | 8192 | 8192 | 8216 | 11272 | Base graph 1 |
| 6 | 2 | 449 | 8192 | 8192 | 8216 | 9514 | Base graph 1 |
| 7 | 2 | 526 | 8192 | 8192 | 8216 | 8121 | Base graph 1 |
| 8 | 2 | 602 | 8192 | 8192 | 8216 | 7096 | Base graph 1 |
| 9 | 2 | 679 | 8192 | 8192 | 8216 | 6291 | Base graph 1 |
| 10 | 4 | 340 | 8192 | 8192 | 8216 | 6282 | Base graph 1 |
| 11 | 4 | 378 | 8192 | 8192 | 8216 | 5650 | Base graph 1 |
| 12 | 4 | 434 | 8192 | 8192 | 8216 | 4921 | Base graph 1 |
| 13 | 4 | 490 | 8192 | 8192 | 8216 | 4359 | Base graph 1 |
| 14 | 4 | 553 | 8192 | 8192 | 8216 | 3862 | Base graph 1 |
| 15 | 4 | 616 | 8192 | 8192 | 8216 | 3467 | Base graph 1 |
| 16 | 4 | 658 | 8192 | 8192 | 8216 | 3246 | Base graph 1 |
| 17 | 6 | 466 | 8192 | 8192 | 8216 | 3055 | Base graph 1 |

(continued)

| MCS index MCS Index $I_{MCS}$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 18 | 6 | 517 | 8192 | 8192 | 8216 | 2754 | Base graph 1 |
| 19 | 6 | 567 | 8192 | 8192 | 8216 | 2511 | Base graph 1 |
| 20 | 6 | 616 | 8192 | 8192 | 8216 | 2311 | Base graph 1 |
| 21 | 6 | 666 | 8192 | 8192 | 8216 | 2138 | Base graph 1 |
| 22 | 6 | 719 | 8192 | 8192 | 8216 | 1980 | Base graph 1 |
| 23 | 6 | 772 | 8192 | 8192 | 8216 | 1844 | Base graph 1 |
| 24 | 6 | 822 | 8192 | 8192 | 8216 | 1732 | Base graph 1 |
| 25 | 6 | 873 | 8192 | 8192 | 8216 | 1631 | Base graph 1 |
| 26 | 6 | 910 | 8192 | 8192 | 8216 | 1564 | Base graph 1 |
| 27 | 6 | 948 | 8192 | 8192 | 8216 | 1502 | Base graph 1 |

**Table 10**

| MCS index MCS Index $I_{MCS}$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 0 | 2 | 30 | 3752 | 3808 | 3768 | 65262 | Base graph 2 |
| 1 | 2 | 40 | 3752 | 3808 | 3768 | 48947 | Base graph 2 |
| 2 | 2 | 50 | 3752 | 3808 | 3768 | 39157 | Base graph 2 |
| 3 | 2 | 64 | 3752 | 3808 | 3768 | 30592 | Base graph 2 |
| 4 | 2 | 78 | 3752 | 3808 | 3768 | 25101 | Base graph 2 |
| 5 | 2 | 99 | 3752 | 3808 | 3768 | 19776 | Base graph 2 |
| 6 | 2 | 120 | 3752 | 3808 | 3768 | 16315 | Base graph 2 |
| 7 | 2 | 157 | 3752 | 3808 | 3768 | 12470 | Base graph 2 |

(continued)

| MCS index MCS Index $I_{MCS}$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 8 | 2 | 193 | 3752 | 3808 | 3768 | 10144 | Base graph 2 |
| 9 | 2 | 251 | 3752 | 3808 | 3768 | 7800 | Base graph 2 |
| 10 | 2 | 308 | 8192 | 8192 | 8216 | 13870 | Base graph 1 |
| 11 | 2 | 379 | 8192 | 8192 | 8216 | 11272 | Base graph 1 |
| 12 | 2 | 449 | 8192 | 8192 | 8216 | 9514 | Base graph 1 |
| 13 | 2 | 526 | 8192 | 8192 | 8216 | 8121 | Base graph 1 |
| 14 | 2 | 602 | 8192 | 8192 | 8216 | 7096 | Base graph 1 |
| 15 | 2 | 679 | 8192 | 8192 | 8216 | 6291 | Base graph 1 |
| 16 | 4 | 378 | 8192 | 8192 | 8216 | 5650 | Base graph 1 |
| 17 | 4 | 434 | 8192 | 8192 | 8216 | 4921 | Base graph 1 |
| 18 | 4 | 490 | 8192 | 8192 | 8216 | 4359 | Base graph 1 |
| 19 | 4 | 553 | 8192 | 8192 | 8216 | 3862 | Base graph 1 |
| 20 | 4 | 616 | 8192 | 8192 | 8216 | 3467 | Base graph 1 |
| 21 | 4 | 658 | 8192 | 8192 | 8216 | 3246 | Base graph 1 |
| 22 | 4 | 699 | 8192 | 8192 | 8216 | 3055 | Base graph 1 |
| 23 | 4 | 772 | 8192 | 8192 | 8216 | 2766 | Base graph 1 |
| 24 | 6 | 567 | 8192 | 8192 | 8216 | 2511 | Base graph 1 |
| 25 | 6 | 616 | 8192 | 8192 | 8216 | 2311 | Base graph 1 |
| 26 | 6 | 666 | 8192 | 8192 | 8216 | 2138 | Base graph 1 |
| 27 | 6 | 772 | 8192 | 8192 | 8216 | 1844 | Base graph 1 |

**Table 11**

| MCS index MCS Index $I_{MCS}$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 0 | 2 | 120 | 3752 | 3808 | 3768 | 16315 | Base graph 2 |
| 1 | 2 | 157 | 3752 | 3808 | 3768 | 12470 | Base graph 2 |
| 2 | 2 | 193 | 3752 | 3808 | 3768 | 10144 | Base graph 2 |
| 3 | 2 | 251 | 3752 | 3808 | 3768 | 7800 | Base graph 2 |
| 4 | 2 | 308 | 8192 | 8192 | 8216 | 13870 | Base graph 1 |
| 5 | 2 | 379 | 8192 | 8192 | 8216 | 11272 | Base graph 1 |
| 6 | 2 | 449 | 8192 | 8192 | 8216 | 9514 | Base graph 1 |
| 7 | 2 | 526 | 8192 | 8192 | 8216 | 8121 | Base graph 1 |
| 8 | 2 | 602 | 8192 | 8192 | 8216 | 7096 | Base graph 1 |
| 9 | 2 | 679 | 8192 | 8192 | 8216 | 6291 | Base graph 1 |
| 10 | 4 | 340 | 8192 | 8192 | 8216 | 6282 | Base graph 1 |
| 11 | 4 | 378 | 8192 | 8192 | 8216 | 5650 | Base graph 1 |
| 12 | 4 | 434 | 8192 | 8192 | 8216 | 4921 | Base graph 1 |
| 13 | 4 | 490 | 8192 | 8192 | 8216 | 4359 | Base graph 1 |
| 14 | 4 | 553 | 8192 | 8192 | 8216 | 3862 | Base graph 1 |
| 15 | 4 | 616 | 8192 | 8192 | 8216 | 3467 | Base graph 1 |
| 16 | 4 | 658 | 8192 | 8192 | 8216 | 3246 | Base graph 1 |
| 17 | 6 | 438 | 8192 | 8192 | 8216 | 3251 | Base graph 1 |
| 18 | 6 | 466 | 8192 | 8192 | 8216 | 3055 | Base graph 1 |
| 19 | 6 | 517 | 8192 | 8192 | 8216 | 2754 | Base graph 1 |
| 20 | 6 | 567 | 8192 | 8192 | 8216 | 2511 | Base graph 1 |

(continued)

| MCS index MCS Index $I_{MCS}$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 21 | 6 | 616 | 8192 | 8192 | 8216 | 2311 | Base graph 1 |
| 22 | 6 | 666 | 8192 | 8192 | 8216 | 2138 | Base graph 1 |
| 23 | 6 | 719 | 8192 | 8192 | 8216 | 1980 | Base graph 1 |
| 24 | 6 | 772 | 8192 | 8192 | 8216 | 1844 | Base graph 1 |
| 25 | 6 | 822 | 8192 | 8192 | 8216 | 1732 | Base graph 1 |
| 26 | 6 | 873 | 8192 | 8192 | 8216 | 1631 | Base graph 1 |
| 27 | 6 | 910 | 8192 | 8192 | 8216 | 1564 | Base graph 1 |
| 28 | 6 | 948 | 8192 | 8192 | 8216 | 1502 | Base graph 1 |

**Table 12**

| MCS index MCS Index $IMCS$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 0 | 2 | 120 | 3752 | 3808 | 3768 | 16315 | Base graph 2 |
| 1 | 2 | 193 | 3752 | 3808 | 3768 | 10144 | Base graph 2 |
| 2 | 2 | 308 | 8192 | 8192 | 8216 | 13870 | Base graph 1 |
| 3 | 2 | 449 | 8192 | 8192 | 8216 | 9514 | Base graph 1 |
| 4 | 2 | 602 | 8192 | 8192 | 8216 | 7096 | Base graph 1 |
| 5 | 4 | 378 | 8192 | 8192 | 8216 | 5650 | Base graph 1 |
| 6 | 4 | 434 | 8192 | 8192 | 8216 | 4921 | Base graph 1 |
| 7 | 4 | 490 | 8192 | 8192 | 8216 | 4359 | Base graph 1 |
| 8 | 4 | 553 | 8192 | 8192 | 8216 | 3862 | Base graph 1 |
| 9 | 4 | 616 | 8192 | 8192 | 8216 | 3467 | Base graph 1 |

(continued)

| MCS index MCS Index $IMCS$ | Modulati on order Modulati on Order $Qm$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 10 | 4 | 658 | 8192 | 8192 | 8216 | 3246 | Base graph 1 |
| 11 | 6 | 466 | 8192 | 8192 | 8216 | 3055 | Base graph 1 |
| 12 | 6 | 517 | 8192 | 8192 | 8216 | 2754 | Base graph 1 |
| 13 | 6 | 567 | 8192 | 8192 | 8216 | 2511 | Base graph 1 |
| 14 | 6 | 616 | 8192 | 8192 | 8216 | 2311 | Base graph 1 |
| 15 | 6 | 666 | 8192 | 8192 | 8216 | 2138 | Base graph 1 |
| 16 | 6 | 719 | 8192 | 8192 | 8216 | 1980 | Base graph 1 |
| 17 | 6 | 772 | 8192 | 8192 | 8216 | 1844 | Base graph 1 |
| 18 | 6 | 822 | 8192 | 8192 | 8216 | 1732 | Base graph 1 |
| 19 | 6 | 873 | 8192 | 8192 | 8216 | 1631 | Base graph 1 |
| 20 | 8 | 682 | 8192 | 8192 | 8216 | 1564 | Base graph 1 |
| 21 | 8 | 711 | 8192 | 8192 | 8216 | 1502 | Base graph 1 |
| 22 | 8 | 754 | 8192 | 8192 | 8216 | 1416 | Base graph 1 |
| 23 | 8 | 797 | 8192 | 8192 | 8216 | 1340 | Base graph 1 |
| 24 | 8 | 841 | 8192 | 8192 | 8216 | 1269 | Base graph 1 |
| 25 | 8 | 885 | 8192 | 8192 | 8216 | 1206 | Base graph 1 |
| 26 | 8 | 916 | 8192 | 8192 | 8216 | 1165 | Base graph 1 |
| 27 | 8 | 948 | 8192 | 8192 | 8216 | 1126 | Base graph 1 |

**Table 13**

| MCS index<br>MCS Index<br>$I_{MCS}$ | Modulati on order<br>Modulati on Order<br>$Qm$ | Target code rate<br>Target code Rate<br>$R \times [1024]$ | $T_{tb}^{Th}$ | $N'^{Th}_{info}$ | $K^{Th}$ | $N_{RE}^{Th}$ | Base<br>graph<br>selection |
|---|---|---|---|---|---|---|---|
| 0 | 2 | 30 | 3752 | 3808 | 3768 | 65262 | Base graph 2 |
| 1 | 2 | 40 | 3752 | 3808 | 3768 | 48947 | Base graph 2 |
| 2 | 2 | 50 | 3752 | 3808 | 3768 | 39157 | Base graph 2 |
| 3 | 2 | 64 | 3752 | 3808 | 3768 | 30592 | Base graph 2 |
| 4 | 2 | 78 | 3752 | 3808 | 3768 | 25101 | Base graph 2 |
| 5 | 2 | 99 | 3752 | 3808 | 3768 | 19776 | Base graph 2 |
| 6 | 2 | 120 | 3752 | 3808 | 3768 | 16315 | Base graph 2 |
| 7 | 2 | 157 | 3752 | 3808 | 3768 | 12470 | Base graph 2 |
| 8 | 2 | 193 | 3752 | 3808 | 3768 | 10144 | Base graph 2 |
| 9 | 2 | 251 | 3752 | 3808 | 3768 | 7800 | Base graph 2 |
| 10 | 2 | 308 | 8192 | 8192 | 8216 | 13870 | Base graph 1 |
| 11 | 2 | 379 | 8192 | 8192 | 8216 | 11272 | Base graph 1 |
| 12 | 2 | 449 | 8192 | 8192 | 8216 | 9514 | Base graph 1 |
| 13 | 2 | 526 | 8192 | 8192 | 8216 | 8121 | Base graph 1 |
| 14 | 2 | 602 | 8192 | 8192 | 8216 | 7096 | Base graph 1 |
| 15 | 4 | 340 | 8192 | 8192 | 8216 | 6282 | Base graph 1 |
| 16 | 4 | 378 | 8192 | 8192 | 8216 | 5650 | Base graph 1 |
| 17 | 4 | 434 | 8192 | 8192 | 8216 | 4921 | Base graph 1 |
| 18 | 4 | 490 | 8192 | 8192 | 8216 | 4359 | Base graph 1 |
| 19 | 4 | 553 | 8192 | 8192 | 8216 | 3862 | Base graph 1 |
| 20 | 4 | 616 | 8192 | 8192 | 8216 | 3467 | Base graph 1 |

(continued)

| MCS index MCS Index $I_{MCS}$ | Modulation order Modulation Order $Q_m$ | Target code rate Target code Rate $R \times [1024]$ | $T_{tb}^{Th}$ | $N'^{Th}_{info}$ | $K^{Th}$ | $N_{RE}^{Th}$ | Base graph selection |
|---|---|---|---|---|---|---|---|
| 21 | 6 | 438 | 8192 | 8192 | 8216 | 3251 | Base graph 1 |
| 22 | 6 | 466 | 8192 | 8192 | 8216 | 3055 | Base graph 1 |
| 23 | 6 | 517 | 8192 | 8192 | 8216 | 2754 | Base graph 1 |
| 24 | 6 | 567 | 8192 | 8192 | 8216 | 2511 | Base graph 1 |
| 25 | 6 | 616 | 8192 | 8192 | 8216 | 2311 | Base graph 1 |
| 26 | 6 | 666 | 8192 | 8192 | 8216 | 2138 | Base graph 1 |
| 27 | 6 | 719 | 8192 | 8192 | 8216 | 1980 | Base graph 1 |
| 28 | 6 | 772 | 8192 | 8192 | 8216 | 1844 | Base graph 1 |

In this solution, when the transport block is mapped to N slots, a manner of determining the resource block size, the quantity of code blocks, and the code block length is constrained by using upper limit values of parameters, so that a channel coding gain can be maximized, and CRC overheads can be reduced.

Solution 3: The following describes in detail a manner of determining parameters such as a transport block size, a code block length, and a quantity of code blocks in S602. The following steps a2 to f2 are mainly included.

Step a2: Determine an unquantized intermediate variable $N_{info}$, where $N_{info} = N_L \cdot R \cdot Q_m \cdot N_{RE}$.

$N_L$ is a quantity of mapping layers of a transport block, $N_{RE}$ is a quantity of resources to which the transport block is mapped and may be specifically a quantity of resource elements (resource element, RE) to which the transport block is mapped, $R$ is a target code rate, and $Q_m$ is a modulation order. Optionally, $N_{RE}$ satisfies the following condition:

$$N_{RE} = \min\left(N_{RE}{}^{*}, N_{RE}^{Th}\right)$$

, or $N_{RE} = N_{RE}{}^{*}$. $N_{RE}{}^{*}$ may be understood as a quantity (actual or nominal (nominal)) of resources to which the transport block can be mapped.

Further, $N_{info}$ may be represented as: $\mathrm{N_{info}} = N_L \cdot R \cdot Q_m \cdot \min\left(N_{RE}{}^{*}, N_{RE}^{Th}\right)$ or $\mathrm{N_{info}} = N_L \cdot R \cdot Q_m \cdot N_{RE}{}^{*}$. $N_{RE}{}^{*}$ is determined in the foregoing first manner or second manner. Optionally, a value of $N_{RE}^{Th}$ is at least one value in Table 9 to Table 13.

The following describes a determining manner of $N_{RE}{}^{*}$. For implementation, refer to any one of the following first manner to third manner.

In a first manner, if a transmission resource includes one slot, $N_{RE}{}^{*}$ may be determined with reference to a manner of determining $N_{RE}$ in the foregoing related technology. Specifically, the solution for determining $N_{RE}$ in the foregoing step a1 may be used.

In a second manner, if a transmission resource includes a plurality of slots, $N_{RE}{}^{*}$ may be determined with reference to manners in the following examples 1 to 4.

Example 1: When quantities of OFDM symbols (or OFDM symbol positions) (that is, N time domain resources are the same, and quantities and positions of OFDM symbols included in all slots corresponding to the N time domain resources are the same) and quantities of frequency domain resource blocks (or resource block positions) in all slots are the same, $N'_{RE,k}$ may be determined in the following manner. $N'_{RE,k}$ may be understood as a quantity of REs allocated to a PUSCH (or PDSCH) in a PRB (an index is denoted as k). For example, when configurations in all slots (for example, quantities and positions of OFDM symbols occupied in all the slots) are completely the same,

$$N'_{RE,k} = N \cdot \left( N_{SC}^{RB} \cdot N_{symb,k}^{sh} - N_{DMRS,k}^{PRB} - N_{oh,k}^{PRB} \right)$$ . A value of $N_{SC}^{RB}$ is a fixed value, and may represent a quantity of subcarriers included in one RB (or referred to as PRB) in frequency domain. For example, $N_{SC}^{RB} = 12$ .

$N_{symb,k}^{sh}$ represents a quantity of scheduled OFDM symbols of a $k^{th}$ RB (an RB may be used as a granularity, or an RBG may be used as a granularity) in one slot. $N_{oh,k}^{PRB}$ represents a quantity of overheads of the $k^{th}$ RB (or RBG) in one slot, for example, a quantity of overheads used for CSI-RS transmission. For another example, when overheads and DMRS configurations of resource blocks in all slots are completely the same,

$$N'_{RE} = N \cdot \left( N_{SC}^{RB} \cdot N_{symb}^{sh} - N_{DMRS}^{PRB} - N_{oh}^{PRB} \right)$$ . A value of $N_{SC}^{RB}$ is a fixed value. For example, $N_{SC}^{RB} = 12$

. $N_{symb}^{sh}$ represents a quantity of scheduled OFDM symbols of each RB (or RBG) in one slot. $N_{oh}^{PRB}$ represents a quantity of overheads of each RB (or RBG) in one slot, for example, a quantity of overheads used for CSI-RS transmission.

Example 2: $N'_{RE,k}$ is determined in the following manner based on a quantity of OFDM symbols (or OFDM symbol positions) and a quantity of frequency domain resource blocks (or resource block positions) in a first slot (or a nominal slot) (that is, whether quantities and positions of N time domain resources and frequency domain resources are the same is not considered). $N'_{RE,k}$ may be understood as a quantity of REs allocated to a PUSCH (or PDSCH) in a PRB (an index is denoted as k) in the first slot. For example, $N'_{RE,k} = N \cdot \left( N_{SC}^{RB} \cdot N_{symb,k}^{sh} - N_{DMRS,k}^{PRB} - N_{oh,k}^{PRB} \right)$

. A value of $N_{SC}^{RB}$ is a fixed value, and may represent a quantity of subcarriers included in one PRB in frequency domain.

For example, $N_{SC}^{RB} = 12$. $N_{symb,k}^{sh}$ represents a quantity of scheduled OFDM symbols of a $k^{th}$ RB (an RB may be used as a granularity, or an RBG may be used as a granularity) in the first slot. $N_{oh,k}^{PRB}$ represents a quantity of overheads of the $k^{th}$ RB (or RBG) in the first slot, for example, a quantity of overheads used for CSI-RS transmission. For another example, when overheads and DMRS configurations of resource blocks in the first slot are completely the same,

$$N'_{RE} = N \cdot \left( N_{SC}^{RB} \cdot N_{symb}^{sh} - N_{DMRS}^{PRB} - N_{oh}^{PRB} \right)$$ . A value of $N_{SC}^{RB}$ is a fixed value. For example, $N_{SC}^{RB} = 12$

. $N_{symb}^{sh}$ represents a quantity of scheduled OFDM symbols of each RB (or RBG) in the first slot. $N_{oh}^{PRB}$ represents a quantity of overheads of each RB (or RBG) in the first slot, for example, a quantity of overheads used for CSI-RS transmission. It may be understood that, English corresponding to this solution may be briefly described as: Based on the number of REs determined in the first L symbols over which the TBoMS (TB processing over multi-slot) transmission is allocated, scaled by N≥1.

Example 3: When quantities of OFDM symbols (or OFDM symbol positions) and quantities of frequency domain resource blocks (or resource block positions) in all slots are not completely the same, $N'_{RE,k}$ may be determined in the following manner. $N'_{RE,k}$ may be understood as a quantity of REs allocated to a PUSCH (or PDSCH) in a PRB (an index is denoted as k). For example, if configurations in all slots are not completely the same, $N'_{RE,k} =$

$$\sum_{s=0}^{N-1} \left( N_{SC}^{RB} \cdot N_{symb,k}^{sh}(s) - N_{DMRS,k}^{PRB}(s) - N_{oh,k}^{PRB}(s) \right)$$ . A value of $N_{SC}^{RB}$ is a fixed value. For example,

$N_{SC}^{RB} = 12$ . $N_{symb,k}^{sh}(s)$ represents a quantity of scheduled OFDM symbols of a $k^{th}$ RB (or RBG) in a slot s.

$N_{oh,k}^{PRB}(s)$ represents a quantity of overheads of the $k^{th}$ RB (or RBG) in the slot s, for example, a quantity of overheads used for CSI-RS transmission. For another example, when overheads and DMRS configurations of resource blocks in

$$N'_{RE} = \sum_{s=0}^{N-1} \left( N_{SC}^{RB} \cdot N_{symb}^{sh}(s) - N_{DMRS}^{PRB}(s) - N_{oh}^{PRB}(s) \right)$$

all slots are completely the same, . A value of $N_{SC}^{RB}$ is a fixed value. For example, $N_{SC}^{RB} = 12$ . $N_{symb}^{sh}(s)$ represents a quantity of scheduled OFDM symbols of each RB (or RBG) in a slot s. $N_{oh}^{PRB}(s)$ represents a quantity of overheads of each RB (or RBG) in the slot s, for example, a quantity of overheads used for CSI-RS transmission.

According to the foregoing method, a quantity of resource elements allocated in the entire PUSCH (or PDSCH) is $N_{RE}^* = \sum_{k=0}^{n_{PRB}-1} N'_{RE,k}$ or $N_{RE}^* = n_{PRB} N'_{RE}$ . It may be understood that, English corresponding to this solution may be briefly described as: Based on all REs determined across the symbols or slots over which the TBoMS transmission is allocated.

Example 4: A quantity of resource elements may be separately counted for each slot. $N'_{RE,k}(s)$ is a quantity of REs allocated to a PUSCH (or PDSCH) in a PRB (an index is denoted as k) in a slot s, a quantity of PRBs scheduled in the slot s is denoted as $n_{PRB}(s)$, and a quantity of REs scheduled and allocated to a PUSCH (or PDSCH) in the slot s is denoted as $n_{PRB}(s)$, that is, a total quantity of resources in $N$ slots to which the transport block is mapped is $N_{RE}$. When quantities of OFDM symbols (or OFDM symbol positions) and quantities of frequency domain resource blocks (or resource block positions) in all slots are not completely the same, $N'_{RE}(s)$ may be determined in the following manner:

$$N'_{RE}(s) = \sum_{k=0}^{n_{PRB}(s)-1} \left( N_{SC}^{RB} \cdot N_{symb,k}^{sh}(s) - N_{DMRS,k}^{PRB}(s) - N_{oh,k}^{PRB}(s) \right)$$

. $N_{SC}^{RB}$ is a fixed value, for example, $N_{SC}^{RB} = 12$ . $N_{symb,k}^{sh}(s)$ represents a quantity of scheduled OFDM symbols of a $k^{th}$ RB (or RBG) in the slot s. $N_{oh,k}^{PRB}(s)$ represents a quantity of overheads of the $k^{th}$ RB (or RBG) in the slot s, for example, a quantity of overheads used for CSI-RS transmission. For another example, when configurations such as quantities of OFDM symbols, quantities of resource blocks, DMRSs, and overheads in all slots are completely the same,

$$N'_{RE}(s) = N'_{RE} = n_{PRB}\left( N_{SC}^{RB} \cdot N_{symb}^{sh} - N_{DMRS}^{PRB} - N_{oh}^{PRB} \right)$$

. A value of $N_{SC}^{RB}$ is a fixed value. For example, $N_{SC}^{RB} = 12$ . $N_{symb}^{sh}$ represents a quantity of scheduled OFDM symbols of each RB (or RBG) in each slot s. $N_{oh}^{PRB}$ represents a quantity of overheads of each RB (or RBG) in each slot s, for example, a quantity of overheads used for CSI-RS transmission. It may be understood that, English corresponding to this solution may be briefly described as: Based on all REs determined across the symbols or slots over which the TBoMS transmission is allocated.

According to the foregoing method, a quantity of resource elements allocated in the entire PUSCH (or PDSCH) is $N_{RE}^* = \sum_{s=0}^{N-1} N'_{RE}(s)$ or $N_{RE}^* = N \cdot N'_{RE}$.

In a third manner, the first information includes an upper limit value $NRE$ of the quantity of resources to which the transport block is mapped, the quantity $N_{RE}$ of resources to which the transport block is mapped is related to the upper limit value $NRE$ of the quantity of resources to which the transport block is mapped, and $N_{info}$ is related to $N_{RE}^{Th}$ .

Step b2: Determine a quantized intermediate variable $N'_{info}$ based on the unquantized intermediate variable $N_{info}$.

It should be noted that for different values of $N_{info}$, methods for determining the transport block size TBS by the UE may be different.

When $N_{info} \leq 3824$, the UE determines a value of the TBS according to the following step c2 and step d2 (denoted as case 1). When $N_{info} > 3824$, the UE determines a value of the TBS according to the following step e2 and step f2 (denoted as case 2). The following separately describes in detail case 1 and case 2.

Case 1: $N_{info} \leq 3824$

In case 1, the value of the transport block size is determined according to the following step c and step d.

Step c2: Determine $N'_{info} = max\left(24, 2^n \times \left\lfloor \frac{N_{info}}{2^n} \right\rfloor\right)$. Herein, $n = max\left(3, \lfloor log_2(N_{info}) \rfloor - 6\right)$.

Further, the quantized intermediate value $N'_{info}$ of the quantity of information bits is related to a quantized intermediate value $N'^{Th}_{info}$ of a nominal quantity of information bits, that is, $N'_{info}$ may be further determined in the following manner: $N'_{info} = min\left(max(24, 2^n \times \left\lfloor \frac{N_{info}}{2^n} \right\rfloor), N'^{Th}_{info}\right)$. Optionally, $N'^{Th}_{info}$ may be any one of the following values, for example, $N'^{Th}_{info} = 3744$, $N'^{Th}_{info} = 3776$, $N'^{Th}_{info} = 3768$, $N'^{Th}_{info} = 3800$, or $N'^{Th}_{info} = 3808$. Optionally, a value of $N'^{Th}_{info}$ is at least one value in Table 9 to Table 13.

Step d2: The UE may query, according to a preset candidate transport block size set, for example, Table 8, a maximum value that is not greater than $N'_{info}$, and use the maximum value as the value of the transport block size, which is denoted as TBS. For example, if $N'_{info}$ determined according to the foregoing formula is 1200, it can be learned according to Table 8 that a maximum value that is not greater than 1200 is 1192. In this case, the TBS is 1192 bits (bit). Table 8 is used as an example. A correspondence between an index and a TBS is not limited in this embodiment of this application.

Further, the first information includes the upper limit value $T^{Th}_{tb}$ of the transport block size, and the transport block size TBS is related to the upper limit value $T^{Th}_{tb}$ of the transport block size. In this case, the transport block size may be further determined in the following manner: $TBS = min\left(TBS^*, T^{Th}_{tb}\right)$ or TBS = TBS*, where a value of TBS* is a value queried according to Table 8. Optionally, a value of $T^{Th}_{tb}$ is at least one value in Table 9 to Table 13. For example, $T^{Th}_{tb} = 3752$, or 3824, or 3728, or 3800.

Case 2: $N_{info} > 3824$

Step e2: Calculate the quantized intermediate value $N'_{info}$ of the quantity of information bits (quantized intermediate number of information bits).

Further, $N'_{info}$ is related to at least one of the following parameters: $N'^{Th}_{info}$, $T^{Th}_{tb}$, and $K^{Th}$.

Implementation 1: $N'_{info}$ is related to at least one of the following parameters: $N'^{Th}_{info}$ and $C_0$.

For example, when $N_{info} \leq C_0 \times N'^{Th}_{info}$, $N'_{info} = min\left(N'^{Th}_{info}, 2^n \times round\left(\frac{(N_{info}-24)}{2^n}\right)\right)$. Herein, $n = \lfloor log_2(N_{info} - 24) \rfloor - 5$.

For another example, when $N_{info} \leq C_0 \times N'^{Th}_{info}$, $N'_{info} = C_0 \times min\left(N'^{Th}_{info}, 2^n \times round\left(\frac{(N_{info}-24)}{2^n}\right)\right)$. Herein, $n = \lfloor log_2(N_{info} - 24) \rfloor - 5$.

For another example, when $N_{info} \leq C_0 \times N'^{Th}_{info}, \; N'_{info} = min\left(C_0 \times N'^{Th}_{info}, 2^n \times round\left(\frac{N_{info}-24}{2^n}\right)\right)$. Herein, $n = \lfloor log_2(N_{info} - 24)\rfloor - 5$.

Optionally, $N'^{Th}_{info}$ may be any one of the following values, for example, $N'^{Th}_{info} = 3744$, $N'^{Th}_{info} = 3776$, $N'^{Th}_{info} = 8192$, $N'^{Th}_{info} = 3768$, $N'^{Th}_{info} = 3800$, $N'^{Th}_{info} = 3808$, or $N'^{Th}_{info} = 8216$. Alternatively, a value of $N'^{Th}_{info}$ is at least one value in Table 9 to Table 13.

Further, the foregoing manner may be used only when the transport block is mapped to N (N is greater than 1) slots. Otherwise, when N is 1, $N'_{info}$ is determined in the following manner:

$$N'_{info} = max\left(3840, 2^n \times round\left(\frac{N_{info}-24}{2^n}\right)\right)$$

. Herein, $n = \lfloor log_2(N_{info} - 24)\rfloor - 5$.

Optionally, $C_0$ is a predefined constant, or the parameter is determined based on configuration information.

For example, $C_0 = 1$, and one transport block is allowed to be transmitted on a scheduled resource by using at most one code block. Through this limitation, the code block length can be maximized, thereby maximizing a coding gain and transmission performance.

For another example, $C_0 = 2$, and one transport block is allowed to be transmitted on a scheduled resource by using at most two code blocks. Through this limitation, the code block length can be maximized, thereby maximizing a coding gain and transmission performance.

Implementation 2: $N'_{into}$ is related to at least one of the following parameters: $N'^{Th}_{info}$, $C_0$, $N'^{Th0}_{info}$, $N'^{Th1}_{info}$, or $N'^{Th2}_{info}$. For details, refer to Table 14a or Table 14b.

**Table 14a**

| Value range of $N_{info}$ | Value (or calculation manner) of $N'_{info}$ |
|---|---|
| $N'^{Th0}_{info} < N_{info} \leq N'^{Th1}_{info}$ | $N'_{info} = min\left(N'^{Th}_{info}, 2^n \times round\left(\frac{N_{info}-24}{2^n}\right)\right)$ |
| $N'^{Th1}_{info} < N_{info} \leq N'^{Th2}_{info}$ | $N'_{info} = min\left(C_0 \times N'^{Th}_{info}, 2^n \times round\left(\frac{N_{info}-24}{2^n}\right)\right)$ or $N'_{info} = C_0 \times min\left(N'^{Th}_{info}, 2^n \times round\left(\frac{N_{info}-24}{2^n}\right)\right)$ |
| Another case | $N'_{info} = max\left(3840, 2^n \times round\left(\frac{N_{info}-24}{2^n}\right)\right)$ |

**Table 14b**

| Value range of $N_{info}$ | Value (or calculation manner) of $N'_{info}$ |
|---|---|
| $N_{info} \leq N'^{Th1}_{info}$ | $N'_{info} = min\left(N'^{Th}_{info}, 2^n \times round\left(\frac{N_{info}-24}{2^n}\right)\right)$ |

(continued)

| Value range of $N_{info}$ | Value (or calculation manner) of $N'_{info}$ |
|---|---|
| Another case | $$N'_{info} = max\left(3840, 2^n \times round\left(\frac{N_{info} - 24}{2^n}\right)\right)$$ |

A manner of obtaining values of $N'^{Th}_{info}$ and $C_0$ is the same as that in implementation 1. $N'^{Th0}_{info}$, $N'^{Th1}_{info}$, and $N'^{Th2}_{info}$ are non-negative values.

It may be understood that, $N'^{Th0}_{info}$, $N'^{Th1}_{info}$, and $N'^{Th2}_{info}$ are parameters related to a quantity of channel-coded code blocks (for example, $C_0$ ), and settings of the parameters correspondingly maximize a channel coding length (and a corresponding channel coding gain).

Step f2: Determine the value TBS of the transport block size based on the target code rate $R$ and $N'_{into}$ (TBS is A, TBS is used in the protocol 38.214, Ais used in the protocol 38.212, and TBS and A may be considered the same).

Optionally, refer to the following manners (1) to (3) for implementation.

(1) If $R \leq \frac{1}{4}$ , the value of *TBS* is related to $T^{Th}_{tb}$ and/or $C_0$.

Optionally, $T^{Th}_{tb}$ may be a parameter related to the upper limit value $K^{Th}$ (or referred to as a nominal code block length) of the code block length and/or a base graph length $K_{cb}$, for example, a constant related to a length $K_{cb}$ = 3840 of a base graph 2. Optionally, $T^{Th}_{tb} = K_{cb} - 16$, $T^{Th}_{tb} = K_{cb} - 24$, or $T^{Th}_{tb} = K_{cb}$. $T^{Th}_{tb}$ may alternatively be another constant, for example, $T^{Th}_{tb} = 3752$, $T^{Th}_{tb} = 3824$, $T^{Th}_{tb} = 3744$, or $T^{Th}_{tb} = 3776$. Further, a value of $T^{Th}_{tb}$ is at least one value in Table 9 to Table 13.

For example, when $C \leq C_0$, $TBS = min\left(T^{Th}_{tb}, 8 \times C \times \left\lceil\frac{N'_{info}+24}{8 \times C}\right\rceil - 24\right)$ , where $C = \left\lceil\frac{N'_{info}+24}{3816}\right\rceil$.

For another example, when $C \leq C_0$, $TBS = min\left(C_0 \times T^{Th}_{tb}, 8 \times C \times \left\lceil\frac{N'_{info}+24}{8 \times C}\right\rceil - 24\right)$, where $C = \left\lceil\frac{N'_{info}+24}{3816}\right\rceil$ . 3816

For another example, when $C \leq C_0$, $TBS = C_0 \times min\left(T^{Th}_{tb}, 8 \times C \times \left\lceil\frac{N'_{info}+24}{8 \times C}\right\rceil - 24\right)$, where $C = \left\lceil\frac{N'_{info}+24}{3816}\right\rceil$.

Further, if $C > C_0$ and the transport block is mapped to N slots (N is greater than 1), it may be considered that the configuration is invalid.

$C_0$ is a predefined constant, or the parameter is determined based on configuration information. Optionally, $C_0$

herein may be the same as $C_0$ in step e2.

For example, $C_0 = 1$, and one transport block is allowed to be transmitted on a scheduled resource by using at most one code block. Through this limitation, the code block length can be maximized, thereby maximizing a coding gain and transmission performance.

For another example, $C_0 = 2$, and one transport block is allowed to be transmitted on a scheduled resource by using at most two code blocks. Through this limitation, the code block length can be maximized, thereby maximizing a coding gain and transmission performance.

If $R > \dfrac{1}{4}$ and $N'_{info} > 8424$, the value of *TBS* is related to $T_{tb}^{Th}$ and/or $C_0$.

Specifically, $T_{tb}^{Th}$ may be a constant related to a nominal code block length $K^{Th}$ and/or a base graph length $K_{cb}$, for example, a constant related to a length $K_{cb} = 8448$ of a base graph 1. A value of $T_{tb}^{Th}$ may be any one of the following: $T_{tb}^{Th} = K_{cb} - 16$, $T_{tb}^{Th} = K_{cb} - 24$, or $T_{tb}^{Th} = K_{cb}$. $T_{tb}^{Th}$ may alternatively be another constant, for example, $T_{tb}^{Th} = 8192$, $T_{tb}^{Th} = 8168$, or $T_{tb}^{Th} = 8424$. Alternatively, a third parameter is $T_{tb}^{Th} = 8216$.

For example, when $C \leq C_0$, $TBS = min\left(T_{tb}^{Th}, 8 \times C \times \left\lceil \dfrac{N'_{info}+24}{8 \times C} \right\rceil - 24\right)$, where $C = \left\lceil \dfrac{N'_{info}+24}{8424} \right\rceil$.

For another example, when $C \leq C_0$, $TBS = min\left(C_0 \times T_{tb}^{Th}, 8 \times C \times \left\lceil \dfrac{N'_{info}+24}{8 \times C} \right\rceil - 24\right)$, where $C = \left\lceil \dfrac{N'_{info}+24}{8424} \right\rceil$.

For another example, when $C \leq C_0$, $TBS = C_0 \times min\left(T_{tb}^{Th}, 8 \times C \times \left\lceil \dfrac{N'_{info}+24}{8 \times C} \right\rceil - 24\right)$, where $C = \left\lceil \dfrac{N'_{info}+24}{8424} \right\rceil$. 8424

Further, if $C > C_0$ and the transport block is mapped to N slots (N is greater than 1), it may be considered that the configuration is invalid.

$C_0$ is a predefined constant, or the parameter is determined based on configuration information. Optionally, $C_0$ herein may be the same as $C_0$ in step e2.

For example, $C_0 = 1$, and one transport block is allowed to be transmitted on a scheduled resource by using at most one code block. Through this limitation, the code block length can be maximized, thereby maximizing a coding gain and transmission performance.

For another example, $C_0 = 2$, and one transport block is allowed to be transmitted on a scheduled resource by using at most two code blocks. Through this limitation, the code block length can be maximized, thereby maximizing a coding gain and transmission performance.

(3) If $R > \dfrac{1}{4}$ and $N'_{info} \leq 8424$, $TBS = 8 \times \left\lceil \dfrac{N'_{info}+24}{8} \right\rceil - 24$.

It should be understood that, according to the foregoing limitation on the transport block size TBS, the transport block can be prevented from being divided into code blocks whose quantity exceeds a specified quantity of code blocks, thereby ensuring a code block length and a corresponding channel coding gain.

Further, the quantity of code blocks and the code block length are related to at least one of the following parameters: $T_{tb}^{Th}$ , $C_0$, $N'_{info}$, and $K^{Th}$. For example, the quantity of code blocks (C in S103, where a calculation manner may be the same as that in an existing protocol) is fixed to 1, and the code block length is the codeword length obtained after TBS coding and determined in the foregoing step.

It should be understood that, according to the method in this embodiment, the code block length can be kept in a relatively large range, so that a coding gain is higher. In addition, impact on the protocol is small.

It should be understood that in an implementation, any method in this embodiment is used only when a manner of mapping the transport block to N slots is enabled.

In an implementation, in this embodiment of this solution, a first channel-coded code block quantity corresponding to the transport block is 1, and a first channel-coded code block length $K$ is equal to the upper limit value $K^{Th}$ of the channel-coded code block length.

In an implementation, a value of $N'^{Th}_{info}$ is at least one value in Table 9 to Table 13.

In an implementation, a value of $T_{tb}^{Th}$ is at least one value in Table 9 to Table 13. In an implementation, a value of $K^{Th}$ is at least one value in Table 9 to Table 13.

It should be understood that, in an implementation, any method in this embodiment is used only when the transport block is sent by using a single layer (or a single antenna port).

It should be understood that the embodiments in this solution may be used together.

Solution 4: For a solution of determining a quantity N of slots, a quantity of OFDM symbols used for transport block transmission, a quantity of OFDM symbols for determining a transport block size, or a quantity of slots for determining a transport block size, refer to the following manner 1 or manner 2 for implementation.

Manner 1: When a transport block is mapped to a plurality of slots, a quantity N of slots is related to time domain resource allocation and an MCS. As shown in the tables in solution 2, there is a relatively strong association between $N_{RE}^{Th}$ and an MCS index. In particular, a larger MCS index corresponds to a smaller value of $N_{RE}^{Th}$ . Correspondingly, a smaller quantity of required time-frequency resources indicates a smaller quantity of time-frequency resources required to reach an upper limit value for not performing code block segmentation. In view of this, different MCSs, different scheduling bandwidths $n_{PRB}$, and a quantity of required OFDM symbols are defined in a predefined manner to indicate the quantity N of slots.

For example, Table 15 to Table 19 are used as examples. Quantities F of OFDM symbols in these tables respectively correspond to maximum quantities of OFDM symbols for not performing code block segmentation in different MCSs and scheduling bandwidths (quantities $n_{PRB}$ of resource blocks) (that is, for F+1, a transport block is segmented into more code blocks). It should be noted that an uplink grant may indicate an MCS index in any one of Table 15 to Table 17. For another example, a downlink grant may indicate an MCS index in any one of Table 17 to Table 19. A terminal device may learn, based on the scheduling bandwidth and the MCS index indicated by the uplink grant or the downlink grant, parameters such as a modulation order and a target code rate of a modulation and coding scheme identified by the MCS index, and a quantity of required OFDM symbols corresponding to the scheduling bandwidth (or a quantity of slots corresponding to the quantity of required OFDM symbols).

In addition, it should be noted that, for any one of the following Table 15 to Table 19, an association relationship between an MCS index and other information in a row in which the MCS index is located is not limited. In actual use, the other information may be one row or several rows shown in the table, all rows in the table, or more rows than those shown in the table. The other information associated with the MCS index may be one column or several columns shown in the table, all columns in the table, or more columns than those shown in the table. The following Table 15 to Table 19 are used as an example, and do not indicate that descriptions of the association between an MCS index and other information (such as a quantity of OFDM symbols and a quantity of slots) in this embodiment of this application are limited to this example.

**Table 15**

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 0 | 2 | 120 | 169 | 84 | 42 | 28 | 21 |
| 1 | 2 | 157 | 129 | 64 | 32 | 21 | 16 |

(continued)

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 2 | 2 | 193 | 105 | 52 | 26 | 17 | 13 |
| 3 | 2 | 251 | 81 | 40 | 20 | 13 | 10 |
| 4 | 2 | 308 | 144 | 72 | 36 | 24 | 18 |
| 5 | 2 | 379 | 117 | 58 | 29 | 19 | 14 |
| 6 | 2 | 449 | 99 | 49 | 24 | 16 | 12 |
| 7 | 2 | 526 | 84 | 42 | 21 | 14 | 10 |
| 8 | 2 | 602 | 73 | 36 | 18 | 12 | 9 |
| 9 | 2 | 679 | 65 | 32 | 16 | 10 | 8 |
| 10 | 4 | 340 | 65 | 32 | 16 | 10 | 8 |
| 11 | 4 | 378 | 58 | 29 | 14 | 9 | 7 |
| 12 | 4 | 434 | 51 | 25 | 12 | 8 | 6 |
| 13 | 4 | 490 | 45 | 22 | 11 | 7 | 5 |
| 14 | 4 | 553 | 40 | 20 | 10 | 6 | 5 |
| 15 | 4 | 616 | 36 | 18 | 9 | 6 | 4 |
| 16 | 4 | 658 | 33 | 16 | 8 | 5 | 4 |
| 17 | 6 | 466 | 31 | 15 | 7 | 5 | 3 |
| 18 | 6 | 517 | 28 | 14 | 7 | 4 | 3 |
| 19 | 6 | 567 | 26 | 13 | 6 | 4 | 3 |
| 20 | 6 | 616 | 24 | 12 | 6 | 4 | 3 |
| 21 | 6 | 666 | 22 | 11 | 5 | 3 | 2 |
| 22 | 6 | 719 | 20 | 10 | 5 | 3 | 2 |
| 23 | 6 | 772 | 19 | 9 | 4 | 3 | 2 |
| 24 | 6 | 822 | 18 | 9 | 4 | 3 | 2 |
| 25 | 6 | 873 | 16 | 8 | 4 | 2 | 2 |
| 26 | 6 | 910 | 16 | 8 | 4 | 2 | 2 |
| 27 | 6 | 948 | 15 | 7 | 3 | 2 | 1 |

**Table 16**

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 0 | 2 | 30 | 679 | 339 | 169 | 113 | 84 |
| 1 | 2 | 40 | 509 | 254 | 127 | 84 | 63 |
| 2 | 2 | 50 | 407 | 203 | 101 | 67 | 50 |
| 3 | 2 | 64 | 318 | 159 | 79 | 53 | 39 |
| 4 | 2 | 78 | 261 | 130 | 65 | 43 | 32 |

(continued)

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 5 | 2 | 99 | 206 | 103 | 51 | 34 | 25 |
| 6 | 2 | 120 | 169 | 84 | 42 | 28 | 21 |
| 7 | 2 | 157 | 129 | 64 | 32 | 21 | 16 |
| 8 | 2 | 193 | 105 | 52 | 26 | 17 | 13 |
| 9 | 2 | 251 | 81 | 40 | 20 | 13 | 10 |
| 10 | 2 | 308 | 144 | 72 | 36 | 24 | 18 |
| 11 | 2 | 379 | 117 | 58 | 29 | 19 | 14 |
| 12 | 2 | 449 | 99 | 49 | 24 | 16 | 12 |
| 13 | 2 | 526 | 84 | 42 | 21 | 14 | 10 |
| 14 | 2 | 602 | 73 | 36 | 18 | 12 | 9 |
| 15 | 2 | 679 | 65 | 32 | 16 | 10 | 8 |
| 16 | 4 | 378 | 58 | 29 | 14 | 9 | 7 |
| 17 | 4 | 434 | 51 | 25 | 12 | 8 | 6 |
| 18 | 4 | 490 | 45 | 22 | 11 | 7 | 5 |
| 19 | 4 | 553 | 40 | 20 | 10 | 6 | 5 |
| 20 | 4 | 616 | 36 | 18 | 9 | 6 | 4 |
| 21 | 4 | 658 | 33 | 16 | 8 | 5 | 4 |
| 22 | 4 | 699 | 31 | 15 | 7 | 5 | 3 |
| 23 | 4 | 772 | 28 | 14 | 7 | 4 | 3 |
| 24 | 6 | 567 | 26 | 13 | 6 | 4 | 3 |
| 25 | 6 | 616 | 24 | 12 | 6 | 4 | 3 |
| 26 | 6 | 666 | 22 | 11 | 5 | 3 | 2 |
| 27 | 6 | 772 | 19 | 9 | 4 | 3 | 2 |

**Table 17**

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 0 | 2 | 120 | 169 | 84 | 42 | 28 | 21 |
| 1 | 2 | 157 | 129 | 64 | 32 | 21 | 16 |
| 2 | 2 | 193 | 105 | 52 | 26 | 17 | 13 |
| 3 | 2 | 251 | 81 | 40 | 20 | 13 | 10 |
| 4 | 2 | 308 | 144 | 72 | 36 | 24 | 18 |
| 5 | 2 | 379 | 117 | 58 | 29 | 19 | 14 |
| 6 | 2 | 449 | 99 | 49 | 24 | 16 | 12 |
| 7 | 2 | 526 | 84 | 42 | 21 | 14 | 10 |

(continued)

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 8 | 2 | 602 | 73 | 36 | 18 | 12 | 9 |
| 9 | 2 | 679 | 65 | 32 | 16 | 10 | 8 |
| 10 | 4 | 340 | 65 | 32 | 16 | 10 | 8 |
| 11 | 4 | 378 | 58 | 29 | 14 | 9 | 7 |
| 12 | 4 | 434 | 51 | 25 | 12 | 8 | 6 |
| 13 | 4 | 490 | 45 | 22 | 11 | 7 | 5 |
| 14 | 4 | 553 | 40 | 20 | 10 | 6 | 5 |
| 15 | 4 | 616 | 36 | 18 | 9 | 6 | 4 |
| 16 | 4 | 658 | 33 | 16 | 8 | 5 | 4 |
| 17 | 6 | 438 | 33 | 16 | 8 | 5 | 4 |
| 18 | 6 | 466 | 31 | 15 | 7 | 5 | 3 |
| 19 | 6 | 517 | 28 | 14 | 7 | 4 | 3 |
| 20 | 6 | 567 | 26 | 13 | 6 | 4 | 3 |
| 21 | 6 | 616 | 24 | 12 | 6 | 4 | 3 |
| 22 | 6 | 666 | 22 | 11 | 5 | 3 | 2 |
| 23 | 6 | 719 | 20 | 10 | 5 | 3 | 2 |
| 24 | 6 | 772 | 19 | 9 | 4 | 3 | 2 |
| 25 | 6 | 822 | 18 | 9 | 4 | 3 | 2 |
| 26 | 6 | 873 | 16 | 8 | 4 | 2 | 2 |
| 27 | 6 | 910 | 16 | 8 | 4 | 2 | 2 |
| 28 | 6 | 948 | 15 | 7 | 3 | 2 | 1 |

**Table 18**

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 0 | 2 | 120 | 169 | 84 | 42 | 28 | 21 |
| 1 | 2 | 193 | 105 | 52 | 26 | 17 | 13 |
| 2 | 2 | 308 | 144 | 72 | 36 | 24 | 18 |
| 3 | 2 | 449 | 99 | 49 | 24 | 16 | 12 |
| 4 | 2 | 602 | 73 | 36 | 18 | 12 | 9 |
| 5 | 4 | 378 | 58 | 29 | 14 | 9 | 7 |
| 6 | 4 | 434 | 51 | 25 | 12 | 8 | 6 |
| 7 | 4 | 490 | 45 | 22 | 11 | 7 | 5 |
| 8 | 4 | 553 | 40 | 20 | 10 | 6 | 5 |
| 9 | 4 | 616 | 36 | 18 | 9 | 6 | 4 |

(continued)

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 10 | 4 | 658 | 33 | 16 | 8 | 5 | 4 |
| 11 | 6 | 466 | 31 | 15 | 7 | 5 | 3 |
| 12 | 6 | 517 | 28 | 14 | 7 | 4 | 3 |
| 13 | 6 | 567 | 26 | 13 | 6 | 4 | 3 |
| 14 | 6 | 616 | 24 | 12 | 6 | 4 | 3 |
| 15 | 6 | 666 | 22 | 11 | 5 | 3 | 2 |
| 16 | 6 | 719 | 20 | 10 | 5 | 3 | 2 |
| 17 | 6 | 772 | 19 | 9 | 4 | 3 | 2 |
| 18 | 6 | 822 | 18 | 9 | 4 | 3 | 2 |
| 19 | 6 | 873 | 16 | 8 | 4 | 2 | 2 |
| 20 | 8 | 682 | 16 | 8 | 4 | 2 | 2 |
| 21 | 8 | 711 | 15 | 7 | 3 | 2 | 1 |
| 22 | 8 | 754 | 14 | 7 | 3 | 2 | 1 |
| 23 | 8 | 797 | 13 | 6 | 3 | 2 | 1 |
| 24 | 8 | 841 | 13 | 6 | 3 | 2 | 1 |
| 25 | 8 | 885 | 12 | 6 | 3 | 2 | 1 |
| 26 | 8 | 916 | 12 | 6 | 3 | 2 | 1 |
| 27 | 8 | 948 | 11 | 5 | 2 | 1 | 1 |

**Table 19**

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 0 | 2 | 30 | 679 | 339 | 169 | 113 | 84 |
| 1 | 2 | 40 | 509 | 254 | 127 | 84 | 63 |
| 2 | 2 | 50 | 407 | 203 | 101 | 67 | 50 |
| 3 | 2 | 64 | 318 | 159 | 79 | 53 | 39 |
| 4 | 2 | 78 | 261 | 130 | 65 | 43 | 32 |
| 5 | 2 | 99 | 206 | 103 | 51 | 34 | 25 |
| 6 | 2 | 120 | 169 | 84 | 42 | 28 | 21 |
| 7 | 2 | 157 | 129 | 64 | 32 | 21 | 16 |
| 8 | 2 | 193 | 105 | 52 | 26 | 17 | 13 |
| 9 | 2 | 251 | 81 | 40 | 20 | 13 | 10 |
| 10 | 2 | 308 | 144 | 72 | 36 | 24 | 18 |
| 11 | 2 | 379 | 117 | 58 | 29 | 19 | 14 |
| 12 | 2 | 449 | 99 | 49 | 24 | 16 | 12 |

(continued)

| MCS index MCS Index $I_{MCS}$ | Modulati on order Modulati on Order $Q_m$ | Target code rate Target code Rate $R$ x [1024] | Quantity F of OFDM symbols required for different bandwidths (resource block quantity $n_{PRB}$) | | | | |
|---|---|---|---|---|---|---|---|
| | | | 8 | 16 | 32 | 48 | 64 |
| 13 | 2 | 526 | 84 | 42 | 21 | 14 | 10 |
| 14 | 2 | 602 | 73 | 36 | 18 | 12 | 9 |
| 15 | 4 | 340 | 65 | 32 | 16 | 10 | 8 |
| 16 | 4 | 378 | 58 | 29 | 14 | 9 | 7 |
| 17 | 4 | 434 | 51 | 25 | 12 | 8 | 6 |
| 18 | 4 | 490 | 45 | 22 | 11 | 7 | 5 |
| 19 | 4 | 553 | 40 | 20 | 10 | 6 | 5 |
| 20 | 4 | 616 | 36 | 18 | 9 | 6 | 4 |
| 21 | 6 | 438 | 33 | 16 | 8 | 5 | 4 |
| 22 | 6 | 466 | 31 | 15 | 7 | 5 | 3 |
| 23 | 6 | 517 | 28 | 14 | 7 | 4 | 3 |
| 24 | 6 | 567 | 26 | 13 | 6 | 4 | 3 |
| 25 | 6 | 616 | 24 | 12 | 6 | 4 | 3 |
| 26 | 6 | 666 | 22 | 11 | 5 | 3 | 2 |
| 27 | 6 | 719 | 20 | 10 | 5 | 3 | 2 |
| 28 | 6 | 772 | 19 | 9 | 4 | 3 | 2 |

In manner 1, because a correspondence between an MCS, a bandwidth, and a quantity of OFDM symbols is fixed, signaling overheads are low. Considering that the correspondence between a quantity of OFDM symbols, an MCS, and a bandwidth is specified, protocol design and implementation may be excessively complex. To simplify the design, this embodiment of this application further provides the following manner 2.

Manner 2: When a transport block is mapped to a plurality of slots, a quantity of slots (or a quantity of OFDM symbols, or a quantity of slots used to determine a transport block size, or a quantity of OFDM symbols used to determine a transport block size) is related to at least one of parameters such as a time domain resource allocation (time domain resource allocation), an MCS, and a quantity $n_{PRB}$ of scheduled resource blocks.

Optionally, as shown in Table 20a, a level range may be classified for the MCS, and each level range corresponds to one candidate slot configuration quantity. Alternatively, as shown in Table 20b, a level range (range) may be classified for $n_{PRB}$, and each level range corresponds to one candidate slot configuration quantity.

**Table 20a**

| MCS index range MCS Index Range | Quantity of slots to which a transport block can be mapped (or quantity of OFDM symbols to which a transport block can be mapped, or quantity of slots used to determine a transport block size, or quantity of OFDM symbols used to determine a transport block size) |
|---|---|
| $0 \leq$ index < mcs0 | $\{1\}U\{\alpha_0 N_0, \alpha_0 N_1, ... , \alpha_0 N_{S0-1}\}$ |
| mcs0 $\leq$ index < mcs1 | $\{1\}U\{\alpha_1 N_0, \alpha_1 N_1, ... , \alpha_1 N_{S1-1}\}$ |
| mcs1 $\leq$ index < mcs2 | $\{1\}U\{\alpha_2 N_0, \alpha_1 N_1, ... , \alpha_2 N_{S2-1}\}$ |
| index $\geq$ mcs2 | $\{1\}U\{\alpha_3 N_0, \alpha_3 N_1, ... , \alpha_3 N_{S3-1}\}$ |

**Table 20b**

| $n_{PRB}$ range (Range) | Quantity of slots to which a transport block can be mapped (or quantity of OFDM symbols to which a transport block can be mapped, or quantity of slots used to determine a transport block size, or quantity of OFDM symbols used to determine a transport block size) |
|---|---|
| $0 \leq n_{PRB} < n0$ | $\{1\}U\{\alpha_0 N_0, \alpha_0 N_1, ... , \alpha_0 N_{S0-1}\}$ |
| $n0 \leq n_{PRB} < n1$ | $\{1\}U\{\alpha_1 N_0, \alpha_1 N_1, ... , \alpha_1 N_{S1-1}\}$ |
| $n1 \leq n_{PRB} < n2$ | $\{1\}U\{\alpha_2 N_0, \alpha_2 N_1, ... , \alpha_2 N_{S2-1}\}$ |
| $n_{PRB} \geq n2$ | $\{1\}U\{\alpha_3 N_0, \alpha_3 N_1, ... , \alpha_3 N_{S3-1}\}$ |

Herein, $S_i$ is a candidate slot configuration quantity corresponding to the $i^{th}$ level, and a value may be an integer from 0 to 8; $\alpha_i$ is a weighted expansion factor of the $i^{th}$ slot quantity, and a value may be an integer from 0 to 8; $N_j$ is a slot quantity, and a value may be an integer from 1 to 8; "U" represents a union set of sets; and mcs0, mcs1, and mcs2 are index level parameters. For example, mcs0 corresponds to a minimum modulation order of 4, mcs1 corresponds to a minimum modulation order of 6, and mcs2 corresponds to a minimum modulation order of 8. The foregoing description is provided by using an example in which three levels are classified, that is, i=0, 1, and 2. In practice, there may be more or fewer levels.

In an optional implementation, $\alpha_3 = 1$, $\alpha_2 = 2$, $\alpha_1 = 4$, and $\alpha_0 = 6$.

In an optional implementation, values of $S_i$ are the same, for example, are 2.

In an optional implementation, values of $S_i$ are the same, for example, are 4.

For example, different MCS level ranges correspond to different candidate slot configuration quantities, as shown in Table 21a below. Alternatively, different scheduled resource block quantity $n_{PRB}$ level ranges correspond to different candidate slot configuration quantities, as shown in Table 21b below.

**Table 21a**

| MCS index range MCS Index Range | Quantity of slots to which a transport block can be mapped (or quantity of OFDM symbols to which a transport block can be mapped, or quantity of slots used to determine a transport block size, or quantity of OFDM symbols used to determine a transport block size) |
|---|---|
| $0 \leq$ index $<$ mcs0 | $\{1, 4, 8, 12, 16, 24, 32\}$ |
| mcs0 $\leq$ index $<$ mcs1 | $\{1,2,4,8\}$ |
| Mcs1 $\leq$ index $<$ mcs2 | $\{1,2\}$ |
| index $\geq$ mcs2 | $\{1\}$ |

**Table 21b**

| $n_{PRB}$ range (Range) | Quantity of slots to which a transport block can be mapped (or quantity of OFDM symbols to which a transport block can be mapped, or quantity of slots used to determine a transport block size, or quantity of OFDM symbols used to determine a transport block size) |
|---|---|
| $0 \leq n_{PRB} < n0$ | $\{1, 4, 8, 12, 16, 24, 32\}$ |
| $n0 \leq n_{PRB} < n1$ | $\{1, 2, 4, 8\}$ |
| $n1 \leq n_{PRB} < n2$ | $\{1, 2\}$ |
| $n_{PRB} \geq n2$ | $\{1\}$ |

In an optional implementation, values of $S_i$ are the same, for example, are 1. Further, when a manner of mapping transmission to a plurality of slots is enabled, a quantity of slots to which transmission is mapped (or a quantity of OFDM symbols, or a quantity of slots used to determine a transport block size, or a quantity of OFDM symbols used to determine a transport block size) may be determined based on an MCS and a preset expansion factor $\alpha$. Alternatively, a quantity of slots to which transmission is mapped (or a quantity of OFDM symbols, or a quantity of slots used to determine a transport block size, or a quantity of OFDM symbols used to determine a transport block size) may be determined based on a quantity $n_{PRB}$ of scheduled resource blocks and a preset expansion factor $\alpha$. For example, the expansion factor $\alpha$ is shown in Table 22a (or 22b) below. A quantity of OFDM symbols determined based on time domain resource allocation (time domain resource allocation) is L, and corresponding $\alpha$ is obtained based on an MCS (or a quantity $n_{PRB}$ of scheduled resource blocks). In this case, it may be determined that a quantity of OFDM symbols to which the transport block is mapped is $\alpha \times L$.

**Table 22a**

| MCS index range MCS Index Range | Expansion factor of a quantity of slots to which a transport block can be mapped (or quantity of OFDM symbols to which a transport block can be mapped, or quantity of slots used to determine a transport block size, or quantity of OFDM symbols used to determine a transport block size), when a manner of mapping transmission to a plurality of slots is enabled |
|---|---|
| $0 \leq$ index < mcs0 | $\alpha_0$ |
| mcs0 $\leq$ index < mcs1 | $\alpha_1$ |
| Mcs1 $\leq$ index < mcs2 | $\alpha_2$ |
| index $\geq$ mcs2 | $\alpha_3$ |

**Table 22b**

| $n_{PRB}$ range (Range) | Expansion factor of a quantity of slots to which a transport block can be mapped (or quantity of OFDM symbols to which a transport block can be mapped, or quantity of slots used to determine a transport block size, or quantity of OFDM symbols used to determine a transport block size), when a manner of mapping transmission to a plurality of slots is enabled |
|---|---|
| $0 \leq n_{PRB}$ < n0 | $\alpha_0$ |
| n0 $\leq n_{PRB}$ < n1 | $\alpha_1$ |
| n1 $\leq n_{PRB}$ < n2 | $\alpha_2$ |
| $n_{PRB} \geq$ n2 | $\alpha_3$ |

Similarly, further, when a manner of mapping transmission to a plurality of slots is enabled, a quantity of slots to which transmission is mapped (or a quantity of OFDM symbols, or a quantity of slots used to determine a transport block size, or a quantity of OFDM symbols used to determine a transport block size) may be determined based on the target code rate R and a preset expansion factor $\alpha$. For example, the expansion factor $\alpha$ is shown in Table 23 below. A quantity of OFDM symbols determined based on time domain resource allocation (time domain resource allocation) is L, and corresponding $\alpha$ is obtained based on an MCS. In this case, it may be determined that a quantity of OFDM symbols to which the transport block is mapped is $\alpha \times L$.

**Table 23**

| Target code rate Target code Rate R | Expansion factor of a quantity of slots to which a transport block can be mapped (or quantity of OFDM symbols to which a transport block can be mapped, or quantity of slots used to determine a transport block size, or quantity of OFDM symbols used to determine a transport block size), when a manner of mapping transmission to a plurality of slots is enabled |
|---|---|
| $0 \leq$ R < R0 | $\alpha_0$ |

(continued)

| Target code rate<br>Target code Rate R | Expansion factor of a quantity of slots to which a transport block can be mapped (or quantity of OFDM symbols to which a transport block can be mapped, or quantity of slots used to determine a transport block size, or quantity of OFDM symbols used to determine a transport block size), when a manner of mapping transmission to a plurality of slots is enabled |
|---|---|
| R0 ≤ R < R1 | $\alpha_1$ |
| R1 ≤ R < R2 | $\alpha_2$ |
| R ≥ R2 | $\alpha_3$ |

Herein, R0, R1, and R2 are code rate level parameters, for example, R0=0.25, R1=0.5, and R2=0.67; and $\alpha_i$ is a weighted extension factor of the ith slot quantity, where i=0, 1, or 2. The foregoing description is provided by using an example in which three levels are classified. In practice, there may be more or fewer levels.

In manner 2, protocol and implementation complexity can be reduced, and scheduling flexibility can be ensured, so that a device does not need to store a table corresponding to manner 1. In addition, in this solution, a transport block can be transmitted by using a relatively large code block length, thereby supporting relatively high transmission performance.

In conclusion, in solution 4, the quantity of slots to which the transport block is mapped is associated with the MCS, or the quantity of slots to which the transport block is mapped is associated with the quantity $n_{PRB}$ of scheduled resource blocks, so that scheduling overheads can be reduced and scheduling flexibility can be ensured. Protocol impact is small, and only a signal may be sent or received. Solution 4 may be used together with any one of the foregoing solution 1 to solution 3.

Further, it should be noted that a design of this solution may be applied to a case in which the quantity $n_{PRB}$ of resource blocks scheduled in frequency domain satisfies a predefined rule. For example, the quantity of resource blocks is $n_{PRB} \leq n_{PRB}^{Th}$, where $n_{PRB}^{Th}$ is an integer. For example, $n_{PRB}^{Th} = 24$. For another example, $n_{PRB}^{Th} = 32$. For another example, $n_{PRB}^{Th} = 48$.

Solution 5: Determine, based on at least one of the following information: a mapping type, a mapped OFDM start symbol S, a quantity L of OFDM symbols that are consecutively mapped (in a single slot, a first slot, or a nominal slot), a (nominal) quantity M of repetitions, an MCS, and a quantity $n_{PRB}$ of scheduled resource blocks, at least one of the following information: a transport block size, a quantity of times that a transport block is actually repeatedly sent, and a quantity of OFDM symbols used for transport block transmission (or a quantity of slots used for transport block transmission, or a quantity of OFDM symbols for determining a transport block size, or a quantity of slots for determining a transport block size).

The following further describes a related technology by using step a' to step e', to describe this solution.

Step a': Determine an unquantized intermediate variable $N_{info}$, where $N_{info} = N_L \cdot R \cdot Q_m \cdot N_{RE}$.

Meanings of the symbols $N_L$, R, $Q_m$, and $N_{RE}$ are the same as those in other embodiments of this application. $N_{RE}$ is a total quantity of resource elements (or a nominal total quantity of resource elements, or a quantity determined based on a nominal quantity of repetitions and nominal time domain and frequency domain resources) within a quantity M of repetitions. For example, $N_{RE} = M \cdot L \cdot \min(156, N'_{RE}) \cdot n_{PRB}$.

Step b': Same as step b, determine a quantized intermediate variable (quantized intermediate number of information bits) $N'_{info}$ based on the unquantized intermediate variable $N_{info}$.

Step c' is the same as step c, and step d' is the same as step d, which are used to determine a nominal value of a transport block size when $N_{info} \leq 3824$ (denoted as case 1). In this case, a quantity of code blocks is 1, and a resource within the (nominal) quantity M of repetitions is used to transmit a single transport block once.

Step e' is similar to step e, and step f is similar to step f, which are used to determine at least one of the following parameters when $N_{info} > 3824$: a nominal quantity C' of code blocks, a size *TBS'* of an actually transmitted single transport block, and a quantity of times that the transport block is actually repeatedly transmitted.

Step e': Determine $N'_{info} = max\left(3840, 2^n \times round\left(\frac{N_{info}-24}{2^n}\right)\right)$. Herein, $n$ =

$$\lfloor log_2(N_{info} - 24)\rfloor - 5$$

Step f: Determine the nominal quantity $C'$ of code blocks based on a target code rate $R$ and $N'_{info}$.

If $R \le \frac{1}{4}$, $C' = \lceil \frac{N'_{info}+24}{3816}\rceil$ .

If $R > \frac{1}{4}$ and $N'_{info} > 8424$, $C' = \lceil \frac{N'_{info}+24}{8424}\rceil$ .

If $R > \frac{1}{4}$ and $N'_{info} \le 8424$, $C' = 1$.

Further, the size $TBS'$ of the actually transmitted single transport block may be further determined. For example,

$$TBS' = 8 \times \lceil \frac{N'_{info}+24}{8\times C'}\rceil - 24$$ . For another example, $TBS' = 8 \times \lceil \frac{N'_{info}+24}{8\times C'}\rceil$ .

In an implementation, the quantity of times that the transport block is actually repeatedly transmitted is $C'$, that is, a value is the same as the nominal quantity $C'$ of code blocks. Further, in this case, the actual transport block size may alternatively be determined according to $C'$ and step a to step f. For example, in step a,

$$N_{RE} = \lfloor M/C'\rfloor \cdot L \cdot min(156, N'_{RE}) \cdot n_{PRB}$$ , or $$N_{RE} = \lfloor M \cdot L/C'\rfloor \cdot min(156, N'_{RE}) \cdot n_{PRB}$$ , or

$$N_{RE} = \lfloor M \cdot L \cdot min(156, N'_{RE})/C'\rfloor \cdot n_{PRB}$$ , or $$N_{RE} = \lfloor M \cdot L \cdot min(156, N'_{RE}) \cdot n_{PRB}/C'\rfloor$$ , and

other steps are completely the same as the existing step b to step f. It should be understood that, when $C' < M$, a transport block size may be relatively large by using this design. However, when $C' > M$, a quantity of TBs may exceed a quantity of slots, and feedback overheads slightly increase. However, a code block length is still not less than a corresponding code block length during M times of repeated transmission.

Further, it may be understood that when $C' < M$ or $C' \ne M$, the quantity L of OFDM symbols to which the transport block is actually mapped is distributed in a plurality of slots (cross-slot, or a non-integer quantity of slots).

In an implementation, when the transport block is mapped to a plurality of slots, at least one of the following parameters is related to time domain resource allocation (time domain resource allocation) and the MCS: a transport block size TBS, a quantized intermediate value $N'_{into}$ of a quantity of information bits (quantized intermediate number of information bits), a code block length K for channel coding, and a quantity $N_{RE}$ of resources to which the transport block is mapped.

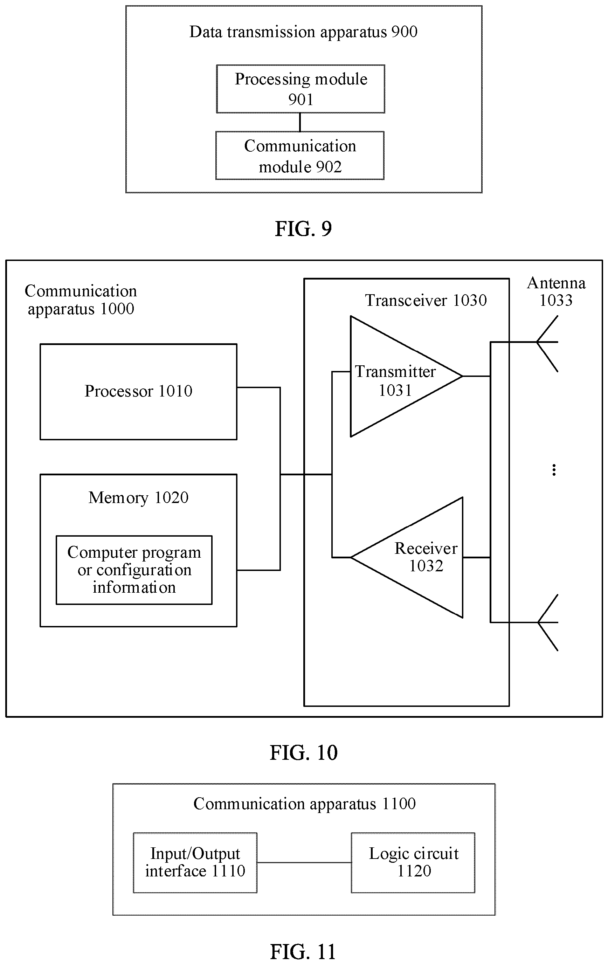

Based on a same concept, as shown in FIG. 9, an embodiment of this application provides a data transmission apparatus 900. The apparatus 900 includes a communication module 902 and a processing module 901. The communication apparatus 900 may be a network device, or may be an apparatus that is used in a network device and that can support the network device in performing a downlink signal transmission method. Alternatively, the communication apparatus 900 may be a terminal device, or may be an apparatus that is used in a terminal device and that can support the terminal device in performing a downlink signal transmission method.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, a component that is in the communication module and that is configured to implement a receiving function may be considered as a receiving unit. It should be understood that the communication module is configured to perform a sending operation and a receiving operation on a network device side or a terminal device side in the foregoing method embodiments. A component that is in the communication module and that is configured to implement a sending function is considered as a sending unit. In other words, the communication module includes the receiving unit and the sending unit. When the apparatus 900 is used in a network device, the receiving unit included in the communication module 902 is configured to perform a receiving operation on a network device side, for example, receive data from a terminal device; and the sending unit included in the communication module 902 is configured to perform a sending operation on a network device side, for example, send data to a terminal device. When the apparatus 900 is used in a terminal device, the receiving unit included in the communication module 902 is configured to perform a receiving operation on a terminal device side, for example, receive data from a network device. The sending unit included in the communication module 902 is configured to perform a sending operation on a terminal device side, for example, send data to a network device. In addition, it should be noted that, if the apparatus is implemented by using a chip/chip circuit, the communication module may be an input/output circuit and/or a communication interface, and perform an input operation (corresponding to the foregoing receiving operation) and an output operation (corresponding to the foregoing sending operation). The processing module is an integrated processor, a microprocessor, or an integrated circuit.

The following describes in detail an implementation in which the apparatus 900 is used in a network device. The apparatus 900 includes:

a processing module 901, configured to determine a transport block size, where the transport block size is related to a first parameter, the first parameter includes at least one of the following: a modulation and coding scheme, configuration information of a transmission resource, a quantity $N_{RE}$ of resources to which a transport block is mapped, and a quantized intermediate value N'$_{info}$, the first parameter is related to a second parameter, and the second parameter includes at least one of the following: an upper limit value *NRE* of the quantity of resources to which the transport block is mapped, an upper limit value $T_{tb}^{Th}$ of the transport block size, and an upper limit value $N'^{Th}_{info}$ of the quantized intermediate value; and

a communication module 902, configured to send or receive data on the transmission resource based on the transport block size.

In this embodiment of this application, for the first parameter used to determine the transport block size, an upper limit value, or referred to as a nominal value, a reference value, or the like, of a corresponding parameter is set, to control the transport block size, so as to control a code block length corresponding to the transport block, thereby avoiding a case in which a length of a single code block is relatively small, and improving a coding gain.

In an optional implementation, the processing module 901 is further configured to: before determining the transport block size, obtain the first parameter. Optionally, in the first aspect, some of parameters that can be included in the first parameter at most may be configured or scheduled, for example, the modulation and coding scheme and the configuration information of the transmission resource. Some of the parameters may be determined according to some rules or conditions, for example, the quantity $N_{RE}$ of resources to which the transport block is mapped and the quantized intermediate value N'$_{info}$.

In an optional implementation, the quantity $N_{RE}$ of resources to which the transport block is mapped may be determined based on the transmission resource and/or the upper limit value *NRE* of the quantity of resources to which the transport block is mapped. The quantity $N_{RE}$ of resources to which the transport block is mapped satisfies the following condition:

$$N_{RE} = \min\left(N_{RE}{}^{*}, N_{RE}^{Th}\right);$$

; or

$$N_{RE} = N_{RE}{}^{*},$$

,where

*min* represents a function of taking a minimum value; and $N_{RE}{}^{*}$ is a quantity that is determined based on the transmission resource and that is of resources to which the transport block can be mapped.

In an optional implementation, a value of $N_{RE}{}^{*}$ is related to a quantity of physical resource blocks PRBs on the transmission resource and a quantity of resource elements REs allocated to the data in each PRB on the transmission resource. $N_{RE}{}^{*}$ satisfies the following condition:

$$N_{RE}{}^{*} = \sum_{k=0}^{n_{PRB}-1} N'_{RE,k},$$

,where

$n_{PRB}$ represents a quantity of physical resource blocks PRBs on the transmission resource, $N'_{RE,k}$ represents a quantity of resource elements REs that can be allocated to the data in a $k^{th}$ PRB on the transmission resource, $0 \leq k \leq n_{PRB} - 1$, $k$ is a natural number, and $N'_{RE,k}$ satisfies the following condition:

$$N'_{RE,k} = N \cdot \left(N_{SC}^{RB} \cdot N_{symb,k}^{sh} - N_{DMRS,k}^{PRB} - N_{oh,k}^{PRB}\right);$$

; or

$$N'_{RE,k} = \sum_{s=0}^{N-1} \left(N_{SC}^{RB} \cdot N_{symb,k}^{sh}(s) - N_{DMRS,k}^{PRB}(s) - N_{oh,k}^{PRB}(s)\right),$$

, where

$N$ represents a quantity of slots included in the transmission resource, $N$ is a positive integer, $N_{SC}^{RB}$ represents a quantity of subcarriers included in one resource block RB in frequency domain, $N_{symb,k}^{sh}$ represents a quantity of scheduled OFDM symbols in a $k^{th}$ RB in one slot, $N_{DMRS,k}^{PRB}$ represents a quantity of resource elements REs of a demodulation reference signal DMRS in a $k^{th}$ physical resource block PRB in one slot, $N_{oh}^{PRB}$ represents a quantity of overheads of each RB in one slot, $N_{symb,k}^{sh}(s)$ represents a quantity of scheduled OFDM symbols in a $k^{th}$ RB in a slot $s$, $N_{DMRS,k}^{PRB}(s)$ represents a quantity of resource elements REs of a demodulation reference signal DMRS in a $k^{th}$ physical resource block PRB in the slot s, $N_{oh,k}^{PRB}(s)$ represents a quantity of overheads of each RB in the slot $s$, $0 \le s \le N$ - 1, and $s$ is a natural number.

In another optional implementation, $N_{RE}{}^*$ is related to a quantity of slots included in the transmission resource and a quantity of resource elements REs that can be allocated to the data in each slot. $N_{RE}{}^*$ satisfies the following condition:

$$N_{RE}{}^* = \sum_{s=0}^{N-1} N'_{RE}(s),$$

where

N represents a quantity of slots included in the transmission resource, $N'_{RE}(s)$ represents a quantity of resource elements REs that can be allocated to the data in a slot s on the transmission resource, $0 \le s \le N$ - 1, s is a natural number, $N$ is a positive integer, and $N'_{RE}(s)$ satisfies the following condition:

$$N'_{RE}(s) = \sum_{k=0}^{n_{PRB}(s)-1} \left(N_{SC}^{RB} \cdot N_{symb,k}^{sh}(s) - N_{DMRS,k}^{PRB}(s) - N_{oh,k}^{PRB}(s)\right),$$

where

$n_{PRB}(s)$ represents a quantity of physical resource blocks in the slot s, $N_{SC}^{RB}$ represents a quantity of subcarriers included in one resource block RB in frequency domain, $N_{symb,k}^{sh}(s)$ represents a quantity of scheduled OFDM symbols in a $k^{th}$ RB in the slot s, $N_{DMRS,k}^{PRB}(s)$ represents a quantity of resource elements REs of a demodulation reference signal DMRS in a $k^{th}$ physical resource block PRB in the slot s, $N_{oh,k}^{PRB}(s)$ represents a quantity of overheads of each RB in the slot $s$, $0 \le k \le n_{PRB}(s)$ - 1, and $k$ is a natural number.

In an optional implementation, a manner of determining the quantized intermediate value $N'_{into}$ is related to a value range of an unquantized intermediate value $N_{info}$, and the unquantized intermediate value $N_{info}$ is determined based on a parameter of the modulation and coding scheme, a quantity of mapping layers of the transport block, and the quantity of resources to which the transport block is mapped. In other words, a value of the quantized intermediate value $N'_{into}$ is related to the parameter of the modulation and coding scheme, the quantity of mapping layers of the transport block, and the quantity of resources to which the transport block is mapped. The parameter of the modulation and coding scheme may include a target code rate and a modulation order that are corresponding to the modulation and coding scheme.

In an optional implementation, the quantized intermediate value $N'_{info}$ satisfies the following condition:

$$N'_{info} = min\left(max\left(24, 2^n \times \left\lfloor \frac{N_{info}}{2^n} \right\rfloor\right), N'^{Th}_{info}\right);$$

; or

$$N'_{info} = max\left(24, 2^n \times \left\lfloor \frac{N_{info}}{2^n} \right\rfloor\right),$$

where

$min$ represents a function of taking a minimum value, $max$ represents a function of taking a maximum value, $n = max\left(3, \left\lfloor log_2(N_{info}) \right\rfloor - 6\right)$, $N_{info} = N_L \cdot R \cdot Q_m \cdot N_{RE}$, $N_{info}$ represents an unquantized intermediate value, $N_{info} \leq 3824$, $N_L$ represents a quantity of mapping layers of the transport block, $R$ is a target code rate corresponding to the modulation and coding scheme, and $Q_m$ is a modulation order corresponding to the modulation and coding scheme.

In another optional implementation, the quantized intermediate value $N'_{info}$ satisfies the following condition:

$$N'_{info} = min\left(N'^{Th}_{info}, 2^n \times round\left(\frac{N_{info} - 24}{2^n}\right)\right),$$

where $3824 < N_{info} \leq C_0 \times N'^{Th}_{info}$, a value of $C_0$ is 1 or 2, $n = \left\lfloor log_2(N_{info} - 24) \right\rfloor - 5$, $N_{info} = N_L \cdot R \cdot Q_m \cdot N_{RE}$, $N_{info}$ represents an unquantized intermediate value, $N_L$ represents a quantity of mapping layers of the transport block, $R$ is a target code rate corresponding to the modulation and coding scheme, and $Q_m$ is a modulation order corresponding to the modulation and coding scheme.

In an optional implementation, the transport block size may be determined based on $N'_{into}$ and the upper limit value $T^{Th}_{tb}$ of the transport block size in the foregoing optional implementation. The transport block size satisfies the following condition:

$$TBS = min\left(TBS^*, T^{Th}_{tb}\right);$$

or

$$TBS = TBS^*,$$

where

$TBS$ represents the transport block size, $TBS^*$ represents a maximum value that is in a preset candidate transport block size set and that is less than $N'_{info}$, and the preset candidate transport block size set includes values of a plurality of transport block sizes.

In an optional implementation, the transport block size is determined based on the target code rate corresponding to the modulation and coding scheme and $N'_{into}$ in the foregoing another optional implementation.

In an optional implementation, a value of $T^{Th}_{tb}$ is any one of 3752, 3776, 3824, 3848, 8192, and 8216, and/or a value of $N'^{Th}_{info}$ is any one of 3744, 3776, 3808, and 8192.

In an optional implementation, the transmission resource includes one or more slots, and the quantity of slots included in the transmission resource is related to at least one of a parameter of the modulation and coding scheme and the configuration information of the transmission resource.

In an optional implementation, the configuration information of the transmission resource includes information indicating a transport block mapping manner, and the transport block mapping manner includes mapping a transport block to a plurality of slots. In this embodiment of this application, the transport block may be mapped to a plurality of slots for transmission, so that a code block length can be increased, and coding performance can be improved.

In an optional implementation, the second parameter is associated with the modulation and coding scheme. Based on the association relationship, a configuration manner of the second parameter can be simplified, overheads can be reduced, and coding performance can be improved.

It should be understood that the solutions and the implementations in embodiments of this application may be randomly combined.

Based on a same concept, as shown in FIG. 10, an embodiment of this application provides a communication apparatus 1000. The communication apparatus 1000 may be a chip or a chip system. Optionally, in this embodiment of this application, the chip system may include a chip, or may include the chip and another discrete device.

The communication apparatus 1000 may include at least one processor 1010. The processor 1010 is coupled to a memory. Optionally, the memory may be located inside the apparatus, or may be located outside the apparatus. For example, the communication apparatus 1000 may further include at least one memory 1020. The memory 1020 stores a computer program, configuration information, a computer program or instructions, and/or data necessary for implementing any one of the foregoing embodiments. The processor 1010 may execute the computer program stored in the memory 1020, to complete the method in any one of the foregoing embodiments.

The coupling in this embodiment of this application is an indirect coupling or a communication connection between apparatuses, units, or modules, may be in an electrical form, a mechanical form, or another form, and is used for information exchange between the apparatuses, the units, or the modules. The processor 1010 may cooperate with the memory 1020. In this embodiment of this application, a specific connection medium between the transceiver 1030, the processor 1010, and the memory 1020 is not limited.

The communication apparatus 1000 may further include the transceiver 1030, and the communication apparatus 1000 may exchange information with another device by using the transceiver 1030. The transceiver 1030 may be a circuit, a bus, a transceiver, or any other apparatus that can be configured to exchange information, or may be referred to as a signal transceiver unit. As shown in FIG. 10, the transceiver 1030 includes a transmitter 1031, a receiver 1032, and an antenna 1033. In addition, when the communication apparatus 1000 is a chip-type apparatus or circuit, the transceiver in the apparatus 1000 may also be an input/output circuit and/or a communication interface, and may input data (or receive data) and output data (or send data). The processor is an integrated processor, a microprocessor, or an integrated circuit, and the processor may determine output data based on input data.

In a possible implementation, the communication apparatus 1000 may be used in a network device. Specifically, the communication apparatus 1000 may be a network device, or may be an apparatus that can support a network device in implementing a function of the network device in any one of the foregoing embodiments. The memory 1020 stores a computer program, a computer program or instructions, and/or data necessary for implementing the function of the network device in any one of the foregoing embodiments. The processor 1010 may execute the computer program stored in the memory 1020, to complete the method performed by the network device in any one of the foregoing embodiments. When the communication apparatus is used in a network device, the transmitter 1031 in the communication apparatus 1000 may be configured to send transmission control configuration information/data to a terminal device by using the antenna 1033, and the receiver 1032 may be configured to receive, by using the antenna 1033, transmission information/data sent by a terminal device.

In another possible implementation, the communication apparatus 1000 may be used in a terminal device. Specifically, the communication apparatus 1000 may be a terminal device, or may be an apparatus that can support a terminal device in implementing a function of the terminal device in any one of the foregoing embodiments. The memory 1020 stores a computer program, a computer program or instructions, and/or data necessary for implementing the function of the terminal device in any one of the foregoing embodiments. The processor 1010 may execute the computer program stored in the memory 1020, to complete the method performed by the terminal device in any one of the foregoing embodiments. When the communication apparatus is used in a terminal device, the receiver 1032 in the communication apparatus 1000 may be configured to receive, by using the antenna 1033, transmission control configuration information/data sent by a network device, and the transmitter 1031 may be configured to send transmission information/data to a network device by using the antenna 1033.

The communication apparatus 1000 provided in this embodiment may be used in a network device to complete the method performed by the network device, or may be used in a terminal device to complete the method performed by the terminal device. Therefore, for technical effects that can be achieved by the communication apparatus, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory may alternatively be any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

As shown in FIG. 11, an embodiment of this application further provides another communication apparatus 1100. The communication apparatus is a chip system, and includes an input/output interface 1110 and a logic circuit 1120.

When the communication apparatus 1100 is a chip system in a terminal device, in some embodiments of this application, the logic circuit and the input/output interface may be configured to perform a function, an operation, or the like performed by the foregoing terminal device. For example, the logic circuit 1120 is configured to determine a transport block size, where the transport block size is related to a first parameter, the first parameter includes at least one of the following: a modulation and coding scheme, configuration information of a transmission resource, a quantity $N_{RE}$ of resources to which a transport block is mapped, and a quantized intermediate value $N'_{info}$, the first parameter is related to a second parameter, and the second parameter includes at least one of the following: an upper limit value $N_{RE}^{Th}$ of the quantity of resources to which the transport block is mapped, an upper limit value $T_{tb}^{Th}$ of the transport block size, and an upper limit value $N'^{Th}_{info}$ of the quantized intermediate value. The input/output interface 1110 is configured to send or receive data on the transmission resource based on the transport block size.

When the communication apparatus 1100 is a chip system in a network device, in some embodiments of this application, the logic circuit and the input/output interface may be configured to perform a function, an operation, or the like performed by the foregoing network device. For example, the logic circuit 1120 is configured to determine a transport block size, where the transport block size is related to a first parameter, the first parameter includes at least one of the following: a modulation and coding scheme, configuration information of a transmission resource, a quantity $N_{RE}$ of resources to which a transport block is mapped, and a quantized intermediate value $N'_{info}$, the first parameter is related to a second parameter, and the second parameter includes at least one of the following: an upper limit value $N_{RE}^{Th}$ of the quantity of resources to which the transport block is mapped, an upper limit value $T_{tb}^{Th}$ of the transport block size, and an upper limit value $N'^{Th}_{info}$ of the quantized intermediate value. The input/output interface 1110 is configured to receive or send data on the transmission resource based on the transport block size.

The communication apparatus 1100 provided in this embodiment may be used in a network device to perform the method performed by the network device, or may be used in a terminal device to perform the method performed by the terminal device. Therefore, for technical effects that can be achieved by the communication apparatus, refer to the foregoing method embodiments. Details are not described herein again.

Based on the foregoing embodiments, an embodiment of this application further provides a communication system. The communication system includes at least one communication apparatus used in a network device and at least one communication apparatus used in a terminal device. For technical effects that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the network device or the method performed by the terminal device in any one of the foregoing embodiments is implemented. The computer-readable storage medium may include any medium that can store program code, such as a USB flash drive, a removable hard disk, a read-only memory, a random access memory, a magnetic disk, or an optical disc.

To implement functions of the communication apparatuses in FIG. 10 and FIG. 11, an embodiment of this application further provides a chip, including a processor, configured to support the communication apparatus in implementing a function of the network device or the terminal device in the foregoing method embodiments. In a possible design, the chip is connected to a memory or the chip includes a memory, and the memory is configured to store a computer program or instructions and data necessary for the communication apparatus.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to embodiments of this application. It should be understood that computer programs or instructions may be used to implement each process and/or each block in the flowcharts and/or the block diagrams and a combination of a process and/or a block in the flowcharts and/or the block diagrams. These computer programs or instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer programs or instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer programs or instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. Thus, this application is intended to cover these modifications and variations, provided that they fall within the scope of the claims of this application and their equivalent technologies.

**Claims**

1. A data transmission method, comprising:

   determining a transport block size, wherein the transport block size is related to a first parameter, the first parameter comprises at least one of the following: a modulation and coding scheme, configuration information of a transmission resource, a quantity $N_{RE}$ of resources to which a transport block is mapped, and a quantized intermediate value $N'_{info}$, the first parameter is related to a second parameter, and the second parameter comprises at least one of the following: an upper limit value $N_{RE}^{Th}$ of the quantity of resources to which the transport block is mapped, an upper limit value $T_{tb}^{Th}$ of the transport block size, and an upper limit value $N'^{Th}_{info}$ of the quantized intermediate value; and
   sending or receiving data on the transmission resource based on the transport block size.

2. The method according to claim 1, wherein the quantity $N_{RE}$ of resources to which the transport block is mapped satisfies the following condition:

$$N_{RE} = \min\left(N_{RE}^{*}, N_{RE}^{Th}\right);$$

or

$$N_{RE} = N_{RE}{}^*,$$

, wherein

*min* represents a function of taking a minimum value; and $N_{RE}{}^*$ is a quantity that is determined based on the transmission resource and that is of resources to which the transport block can be mapped.

3. The method according to claim 2, wherein $N_{RE}{}^*$ satisfies the following condition:

$$N_{RE}{}^* = N \cdot \left(N_{SC}^{RB} \cdot N_{symb}^{sh} - N_{DMRS}^{PRB} - N_{oh}^{PRB}\right) \cdot n_{PRB},$$

, wherein

$N$ represents a quantity of slots comprised in the transmission resource, $N$ is a positive integer, $N_{SC}^{RB}$ represents a quantity of subcarriers comprised in one resource block RB in frequency domain, $N_{symb}^{sh}$ represents a quantity of scheduled OFDM symbols in one slot, $N_{DMRS}^{PRB}$ represents a quantity of resource elements Res of a demodulation reference signal DMRS in each physical resource block PRB in one slot, $N_{oh}^{PRB}$ represents a quantity of overheads, and $n_{PRB}$ represents a quantity of physical resource blocks PRBs on the transmission resource.

4. The method according to claim 2, wherein $N_{RE}{}^*$ satisfies the following condition:

$$N_{RE}{}^* = \sum_{k=0}^{n_{PRB}-1} N'_{RE,k},$$

, wherein

$n_{PRB}$ represents a quantity of physical resource blocks PRBs on the transmission resource, $N'_{RE,k}$ represents a quantity of resource elements REs that can be allocated to the data in a $k^{th}$ PRB on the transmission resource, $0 \le k \le n_{PRB} - 1$, $k$ is a natural number, and $N'_{RE,k}$ satisfies the following condition:

$$N'_{RE,k} = N \cdot \left(N_{SC}^{RB} \cdot N_{symb,k}^{sh} - N_{DMRS,k}^{PRB} - N_{oh,k}^{PRB}\right);$$

or

$$N'_{RE,k} = \sum_{s=0}^{N-1} \left(N_{SC}^{RB} \cdot N_{symb,k}^{sh}(s) - N_{DMRS,k}^{PRB}(s) - N_{oh,k}^{PRB}(s)\right),$$

, wherein

$N$ represents a quantity of slots comprised in the transmission resource, $N$ is a positive integer, $N_{SC}^{RB}$ represents a quantity of subcarriers comprised in one resource block RB in frequency domain, $N_{symb,k}^{sh}$ represents a quantity of scheduled frequency division multiplexing OFDM symbols in a $k^{th}$ RB in one slot, $N_{DMRS,k}^{PRB}$ represents a quantity of resource elements REs of a demodulation reference signal DMRS in a $k^{th}$ physical resource block PRB in one slot, $N_{oh}^{PRB}$ represents a quantity of overheads of each RB in one slot, $N_{symb,k}^{sh}(s)$ represents a quantity of scheduled OFDM symbols in a $k^{th}$ RB in a slot s, $N_{DMRS,k}^{PRB}(s)$ represents a quantity of resource elements REs of a demodulation reference signal DMRS in a k$^{th}$ physical resource block PRB in the slot s, $N_{oh,k}^{PRB}(s)$ represents a quantity of overheads of each RB in the slot s, $0 \leq s \leq N - 1$, and s is a natural number.

5. The method according to claim 2, wherein $N_{RE}{}^*$ satisfies the following condition:

$$N_{RE}{}^* = \sum_{S=0}^{N-1} N'_{RE}(s),$$

, wherein

N represents a quantity of slots comprised in the transmission resource, $N'_{RE}(s)$ represents a quantity of resource elements REs that can be allocated to the data in a slot s on the transmission resource, $0 \leq s \leq N - 1$, s is a natural number, N is a positive integer, and $N'_{RE}(s)$ satisfies the following condition:

$$N'_{RE}(s) = \sum_{k=0}^{n_{PRB}(s)-1} \left( N_{SC}^{RB} \cdot N_{symb,k}^{sh}(s) - N_{DMRS,k}^{PRB}(s) - N_{oh,k}^{PRB}(s) \right),$$

, wherein

$n_{PRB}(s)$ represents a quantity of physical resource blocks in the slot s, $N_{SC}^{RB}$ represents a quantity of subcarriers comprised in one resource block RB in frequency domain, $N_{symb,k}^{sh}(s)$ represents a quantity of scheduled frequency division multiplexing OFDM symbols in a k$^{th}$ RB in the slot s, $N_{DMRS,k}^{PRB}(s)$ represents a quantity of resource elements REs of a demodulation reference signal DMRS in a k$^{th}$ physical resource block PRB in the slot s, $N_{oh,k}^{PRB}(s)$ represents a quantity of overheads of each RB in the slot s, $0 \leq k \leq n_{PRB}(s) - 1$, and k is a natural number.

6. The method according to any one of claims 1 to 5, wherein the quantized intermediate value $N'_{into}$ satisfies the following condition:

$$N'_{info} = min\left( max\left( 24, 2^n \times \left\lfloor \frac{N_{info}}{2^n} \right\rfloor \right), N'^{Th}_{info} \right);$$

; or

$$N'_{info} = max\left( 24, 2^n \times \left\lfloor \frac{N_{info}}{2^n} \right\rfloor \right),$$

, wherein

*min* represents a function of taking a minimum value, *max* represents a function of taking a maximum value,

$$n = max\left( 3, \left\lfloor log_2(N_{info}) \right\rfloor - 6 \right)$$, $N_{info} = NL \cdot R \cdot Q_m \cdot N_{RE}$, $N_{info}$ represents an unquantized intermediate value, $N_{info} \leq 3824$, $N_L$ represents a quantity of mapping layers of the transport block, R is a target code rate corresponding to the modulation and coding scheme, and $Q_m$ is a modulation order corresponding to the modulation and coding scheme.

7. The method according to claim 6, wherein the transport block size satisfies the following condition:

$$TBS = min\left( TBS^*, T_{tb}^{Th} \right);$$

or

$$TBS = TBS^*,$$

, wherein
*TBS* represents the transport block size, *TBS\** represents a maximum value that is in a preset candidate transport block size set and that is less than $N'_{info}$, and the preset candidate transport block size set comprises values of a plurality of transport block sizes.

8. The method according to any one of claims 1 to 5, wherein the quantized intermediate value $N'_{info}$ satisfies the following condition:

$$N'_{info} = \min\left(N'^{Th}_{info}, 2^n \times \text{round}\left(\frac{N_{info}-24}{2^n}\right)\right);$$

or

$$N'_{info} = \max\left(3840, 2^n \times round\left(\frac{N_{info}-24}{2^n}\right)\right),$$

, wherein $3824 < N_{info} \leq C_0 \times N'^{Th}_{info}$, a value of $C_0$ is 1 or 2, $n = \lfloor log_2(N_{info}-24)\rfloor - 5$, $N_{info} = N_L \cdot R \cdot Q_m \cdot N_{RE}$, $N_{info}$ represents an unquantized intermediate value, $N_L$ represents a quantity of mapping layers of the transport block, R is a target code rate corresponding to the modulation and coding scheme, and $Q_m$ is a modulation order corresponding to the modulation and coding scheme.

9. The method according to claim 8, wherein a size of the transport block is determined by the target code rate corresponding to the modulation and coding scheme and $N'_{info}$.

10. The method according to claim 9, wherein if $R \leq \frac{1}{4}$, $TBS = 8 \times C \times \left\lceil\frac{N'_{info}+24}{8 \times C}\right\rceil - 24$ and $C = \left\lceil\frac{N'_{info}+24}{3816}\right\rceil$; or

    if $R > \frac{1}{4}$ and $N'_{info} > 8424$, $TBS = 8 \times C \times \left\lceil\frac{N'_{info}+24}{8 \times C}\right\rceil - 24$ and $C = \left\lceil\frac{N'_{info}+24}{8424}\right\rceil$; or

    if $R > \frac{1}{4}$ and $N'_{info} \leq 8424$, $TBS = 8 \times \left\lceil\frac{N'_{info}+24}{8}\right\rceil - 24$.

11. The method according to any one of claims 6 to 10, wherein a value of $N_L$ is 1.

12. The method according to any one of claims 6 to 11, wherein a value of $T^{Th}_{tb}$ is any one of 3744, 3752, 3776, 3824, 3848, 8192, 8216, and 8424, and/or a value of $N'^{Th}_{info}$ is any one of 3744, 3776, 3808, 8192, and 8424.

13. The method according to any one of claims 1 to 12, wherein the upper limit value $T^{Th}_{tb}$ of the transport block size is related to the target code rate corresponding to the modulation and coding scheme.

14. The method according to claim 13, wherein when the target code rate corresponding to the modulation and coding scheme is less than or equal to 0.25, the value of $T^{Th}_{tb}$ is 3824; or

when the target code rate corresponding to the modulation and coding scheme is less than 0.3, the value of $T_{tb}^{Th}$ is 3752; or

when the target code rate corresponding to the modulation and coding scheme is greater than or equal to 0.3, the value of $T_{tb}^{Th}$ is 8192 or 8424.

15. The method according to any one of claims 1 to 14, wherein the transmission resource comprises one or more slots, and the quantity of slots comprised in the transmission resource is related to at least one of a parameter of the modulation and coding scheme, the configuration information of the transmission resource, and a quantity of scheduled resource blocks.

16. The method according to claim 15, wherein a larger modulation and coding scheme MCS index corresponding to the parameter of the modulation and coding scheme indicates a smaller quantity of slots comprised in the transmission resource.

17. The method according to any one of claims 1 to 16, wherein the configuration information of the transmission resource comprises information indicating a transport block mapping manner, and the transport block mapping manner comprises mapping a transport block to a plurality of slots.

18. The method according to any one of claims 1 to 17, wherein the method further comprises:
before the transport block size is determined, obtaining a message indicating a quantity of slots to which the transport block is mapped, wherein the message comprises an uplink grant message, a downlink grant message, a radio resource control RRC message, or a medium access control-control element MAC-CE message.

19. The method according to any one of claims 1 to 18, wherein the second parameter is associated with the modulation and coding scheme.

20. A data transmission apparatus, comprising:

a processing module, configured to determine a transport block size, wherein the transport block size is related to a first parameter, the first parameter comprises at least one of the following: a modulation and coding scheme, configuration information of a transmission resource, a quantity $N_{RE}$ of resources to which a transport block is mapped, and a quantized intermediate value N'$_{info}$, the first parameter is related to a second parameter, and the second parameter comprises at least one of the following: an upper limit value $N_{RE}^{Th}$ of the quantity of resources to which the transport block is mapped, an upper limit value $T_{tb}^{Th}$ of the transport block size, and an upper limit value $N'^{Th}_{info}$ of the quantized intermediate value; and
a communication module, configured to send or receive data on the transmission resource based on the transport block size.

21. The apparatus according to claim 20, wherein the quantity $N_{RE}$ of resources to which the transport block is mapped satisfies the following condition:

$$N_{RE} = \min\left(N_{RE}^{*}, N_{RE}^{Th}\right);$$

or

$$N_{RE} = N_{RE}^{*},$$

, wherein
min represents a function of taking a minimum value; and $N_{RE}^{*}$ is a quantity that is determined based on the transmission resource and that is of resources to which the transport block can be mapped.

22. The apparatus according to claim 21, wherein $N_{RE}{}^*$ satisfies the following condition:

$$N_{RE}{}^* = N \cdot \left( N_{SC}^{RB} \cdot N_{symb}^{sh} - N_{DMRS}^{PRB} - N_{oh}^{PRB} \right) \cdot n_{PRB},$$

, wherein

N represents a quantity of slots comprised in the transmission resource, N is a positive integer, $N_{SC}^{RB}$ represents a quantity of subcarriers comprised in one resource block RB in frequency domain, $N_{symb}^{sh}$ represents a quantity of scheduled OFDM symbols in one slot, $N_{DMRS}^{PRB}$ represents a quantity of resource elements REs of a demodulation reference signal DMRS in each physical resource block PRB in one slot, $N_{oh}^{PRB}$ represents a quantity of overheads, and $n_{PRB}$ represents a quantity of physical resource blocks PRBs on the transmission resource.

23. The apparatus according to claim 21, wherein $N_{RE}{}^*$ satisfies the following condition:

$$N_{RE}{}^* = \sum_{k=0}^{n_{PRB}-1} N'_{RE,k},$$

, wherein
$n_{PRB}$ represents a quantity of physical resource blocks PRBs on the transmission resource, $N'_{RE,k}$ represents a quantity of resource elements REs that can be allocated to the data in a $k^{th}$ PRB on the transmission resource, $0 \le k \le n_{PRB}$ - 1, $k$ is a natural number, and $N'_{RE,k}$ satisfies the following condition:

$$N'_{RE,k} = N \cdot \left( N_{SC}^{RB} \cdot N_{symb,k}^{sh} - N_{DMRS,k}^{PRB} - N_{oh,k}^{PRB} \right);$$

or

$$N'_{RE,k} = \sum_{s=0}^{N-1} \left( N_{SC}^{RB} \cdot N_{symb,k}^{sh}(s) - N_{DMRS,k}^{PRB}(s) - N_{oh,k}^{PRB}(s) \right),$$

, wherein

$N$ represents a quantity of slots comprised in the transmission resource, $N$ is a positive integer, $N_{SC}^{RB}$ represents a quantity of subcarriers comprised in one resource block RB in frequency domain, $N_{symb,k}^{sh}$ represents a quantity of scheduled frequency division multiplexing OFDM symbols in a $k^{th}$ RB in one slot, $N_{DMRS,k}^{PRB}$ represents a quantity of resource elements REs of a demodulation reference signal DMRS in a $k^{th}$ physical resource block PRB in one slot, $N_{oh}^{PRB}$ represents a quantity of overheads of each RB in one slot, $N_{symb,k}^{sh}(s)$ represents a quantity of scheduled OFDM symbols in a $k^{th}$ RB in a slot s, $N_{DMRS,k}^{PRB}(s)$ represents a quantity of resource elements REs of a demodulation reference signal DMRS in a $k^{th}$ physical resource block PRB in the slot s, $N_{oh,k}^{PRB}(s)$ represents a quantity of overheads of each RB in the slot s, $0 \le s \le N$ - 1, and s is a natural number.

24. The apparatus according to claim 21, wherein $N_{RE}{}^*$ satisfies the following condition:

$$N_{RE}{}^* = \sum_{s=0}^{N-1} N'_{RE}(s),$$

, wherein

N represents a quantity of slots comprised in the transmission resource, $N'_{RE}(s)$ represents a quantity of resource elements REs that can be allocated to the data in a slot s on the transmission resource, $0 \le s \le N - 1$, s is a natural number, $N$ is a positive integer, and $N'_{RE}(s)$ satisfies the following condition:

$$N'_{RE}(s) = \sum_{k=0}^{n_{PRB}(s)-1} \left( N_{SC}^{RB} \cdot N_{symb,k}^{sh}(s) - N_{DMRS,k}^{PRB}(s) - N_{oh,k}^{PRB}(s) \right),$$

, wherein

$n_{PRB}(s)$ represents a quantity of physical resource blocks in the slot s, $N_{SC}^{RB}$ represents a quantity of subcarriers comprised in one resource block RB in frequency domain, $N_{symb,k}^{sh}(s)$ represents a quantity of scheduled frequency division multiplexing OFDM symbols in a $k^{th}$ RB in the slot s, $N_{DMRS,k}^{PRB}(s)$ represents a quantity of resource elements REs of a demodulation reference signal DMRS in a $k^{th}$ physical resource block PRB in the slot s, $N_{oh,k}^{PRB}(s)$ represents a quantity of overheads of each RB in the slot s, $0 \le k \le n_{PRB}(s) - 1$, and $k$ is a natural number.

25. The apparatus according to any one of claims 20 to 24, wherein the quantized intermediate value $N'_{into}$ satisfies the following condition:

$$N'_{info} = min\left( max\left( 24, 2^n \times \left\lfloor \frac{N_{info}}{2^n} \right\rfloor \right), N'^{Th}_{info} \right);$$

or

$$N'_{info} = max\left( 24, 2^n \times \left\lfloor \frac{N_{info}}{2^n} \right\rfloor \right),$$

, wherein

*min* represents a function of taking a minimum value, *max* represents a function of taking a maximum value, $n = max\left( 3, \lfloor log_2(N_{info}) \rfloor - 6 \right)$, $N_{info} = N_L \cdot R \cdot Q_m \cdot N_{RE}$, $N_{info}$ represents an unquantized intermediate value, $N_{info} \le 3824$, $N_L$ represents a quantity of mapping layers of the transport block, R is a target code rate corresponding to the modulation and coding scheme, and $Q_m$ is a modulation order corresponding to the modulation and coding scheme.

26. The apparatus according to claim 25, wherein the transport block size satisfies the following condition:

$$TBS = min\left( TBS^*, T_{tb}^{Th} \right);$$

or

$$TBS = TBS^*,$$

wherein

*TBS* represents the transport block size, *TBS\** represents a maximum value that is in a preset candidate transport block size set and that is less than $N'_{info}$, and the preset candidate transport block size set comprises values of a plurality of transport block sizes.

27. The apparatus according to any one of claims 20 to 24, wherein the quantized intermediate value $N'_{info}$ satisfies the following condition:

$$N'_{info} = \min\left(N'^{Th}_{info}, 2^n \times \text{round}\left(\frac{N_{info}-24}{2^n}\right)\right);$$

or

$$N'_{info} = max\left(3840, 2^n \times round\left(\frac{N_{info}-24}{2^n}\right)\right),$$

, wherein $3824 < N_{info} \le C_0 \times N'^{Th}_{info}$, a value of $C_0$ is 1 or 2, $n = \lfloor log_2(N_{info} - 24)\rfloor - 5$, $N_{info} = N_L \cdot R \cdot Q_m \cdot N_{RE}$, $N_{info}$ represents an unquantized intermediate value, $N_L$ represents a quantity of mapping layers of the transport block, $R$ is a target code rate corresponding to the modulation and coding scheme, and $Q_m$ is a modulation order corresponding to the modulation and coding scheme.

28. The apparatus according to claim 27, wherein a size of the transport block is determined by the target code rate corresponding to the modulation and coding scheme and $N'_{info}$.

29. The apparatus according to claim 28, wherein if $R \le \frac{1}{4}$, $TBS = 8 \times C \times \left\lceil\frac{N'_{info}+24}{8 \times C}\right\rceil - 24$ and $C = \left\lceil\frac{N'_{info}+24}{3816}\right\rceil$; or

if $R > \frac{1}{4}$ and $N'_{info} > 8424$, $TBS = 8 \times C \times \left\lceil\frac{N'_{info}+24}{8 \times C}\right\rceil - 24$ and $C = \left\lceil\frac{N'_{info}+24}{8424}\right\rceil$; or

if $R > \frac{1}{4}$ and $N'_{info} \le 8424$, $TBS = 8 \times \left\lceil\frac{N'_{info}+24}{8}\right\rceil - 24$.

30. The apparatus according to any one of claims 25 to 29, wherein a value of $N_L$ is 1.

31. The apparatus according to any one of claims 25 to 30, wherein a value of $T^{Th}_{tb}$ is any one of 3744, 3752, 3776, 3824, 3848, 8192, 8216, and 8424, and/or a value of $N'^{Th}_{info}$ is any one of 3744, 3776, 3808, 8192, and 8424.

32. The apparatus according to any one of claims 20 to 31, wherein the upper limit value $T^{Th}_{tb}$ of the transport block size is related to the target code rate corresponding to the modulation and coding scheme.

33. The apparatus according to claim 32, wherein when the target code rate corresponding to the modulation and coding scheme is less than or equal to 0.25, the value of $T^{Th}_{tb}$ is 3824; or

when the target code rate corresponding to the modulation and coding scheme is less than 0.3, the value of $T^{Th}_{tb}$ is 3752; or

when the target code rate corresponding to the modulation and coding scheme is greater than or equal to 0.3, the value of $T^{Th}_{tb}$ is 8192 or 8424.

34. The apparatus according to any one of claims 20 to 33, wherein the transmission resource comprises one or more slots, and the quantity of slots comprised in the transmission resource is related to at least one of a parameter of the modulation and coding scheme, the configuration information of the transmission resource, and a quantity of scheduled resource blocks.

35. The apparatus according to claim 34, wherein a larger modulation and coding scheme MCS index corresponding to the parameter of the modulation and coding scheme indicates a smaller quantity of slots comprised in the transmission resource.

36. The apparatus according to any one of claims 20 to 35, wherein the configuration information of the transmission resource comprises information indicating a transport block mapping manner, and the transport block mapping manner comprises mapping a transport block to a plurality of slots.

37. The apparatus according to any one of claims 20 to 36, wherein the processing module is further configured to: before determining the transport block size, obtain, through the communication module, a message indicating a quantity of slots to which the transport block is mapped, wherein the message comprises an uplink grant message, a downlink grant message, a radio resource control RRC message, or a medium access control-control element MAC-CE message.

38. The apparatus according to any one of claims 20 to 37, wherein the second parameter is associated with the modulation and coding scheme.

39. A communication apparatus, comprising:
a processor, wherein the processor is coupled to a memory, the memory is configured to store a computer program or instructions, and the processor is configured to execute the computer program or the instructions to implement the method according to any one of claims 1 to 19.

40. A communication apparatus, comprising a logic circuit and an input/output interface, wherein the input/output interface is configured to communicate with another apparatus, and the logic circuit is configured to perform the method according to any one of claims 1 to 19.

41. A computer-readable storage medium, wherein the computer-readable storage medium stores a computer program or instructions, and when the instructions are run on a computer, the method according to any one of claims 1 to 19 is implemented.

42. A computer program product, wherein the computer product comprises a computer program, and when the computer program is run, the method according to any one of claims 1 to 19 is implemented.

FIG. 1

S101 | MAC PDU (transport block)

S102 | Transport block CRC information addition

S103 | Code block segmentation and CRC addition

S104 | Channel coding

S105 | Rate matching and scrambling

S106 | Modulation and layer mapping

S107 | Mapping to an allocated time-frequency resource (including one or more slots)

FIG. 2

FIG. 3

FIG. 4

EP 4 280 477 A1

FIG. 5

S600: Uplink grant/Downlink grant
(MCS and configuration information of a
transmission resource)

S601: Determine a
transport block size

S602: The terminal device sends or receives data

(based on the transport block size and the
transmission resource)

FIG. 6

One PUSCH or PDSCH transmission occasion

FIG. 7a

One PUSCH or PDSCH transmission occasion

FIG. 7b

Frequency (RB or RBG)

Time
(OFDM)

0  1      ...      13      0  1      ...      13

Slot i                    Slot j

One PUSCH or PDSCH transmission occasion

FIG. 7c

| Terminal device | | Network device |

S800: Uplink grant/downlink grant
(MCS and configuration information of
a transmission resource)

S801: Determine a
transport block size

S802: The network device receives or sends data

(based on the transport block size and the
transmission resource)

FIG. 8

Data transmission apparatus 900

Processing module
901

Communication
module 902

## FIG. 9

Communication
apparatus 1000

Transceiver 1030

Antenna
1033

Processor 1010

Transmitter
1031

Memory 1020

Computer program
or configuration
information

Receiver
1032

## FIG. 10

Communication apparatus 1100

Input/Output
interface 1110

Logic circuit
1120

## FIG. 11

**INTERNATIONAL SEARCH REPORT**

| International application No. |
| --- |
| **PCT/CN2022/082478** |

| A. | CLASSIFICATION OF SUBJECT MATTER |
| --- | --- |

H04B 10/516(2013.01)i

According to International Patent Classification (IPC) or to both national classification and IPC

| B. | FIELDS SEARCHED |
| --- | --- |

Minimum documentation searched (classification system followed by classification symbols)

H04B H04W

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 中间值, 大小, 上限, 最值, 资源, 长度, 最大值, 门限, 传输块, middle value, size, resource, upper limit, TB, MCS, length, maximum value, threshold, transport block

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111988849 A (CHENDU TD TECHNOLOGY LTD.) 24 November 2020 (2020-11-24) description, paragraphs 0060-0113, and figures 2-5 | 1-42 |
| A | WO 2018126414 A1 (GUANGDONG OPPO MOBILE TELECOMMUNICATIONS CORP., LTD.) 12 July 2018 (2018-07-12) entire document | 1-42 |
| A | WO 2018126413 A1 (GUANGDONG OPPO MOBILE TELECOMMUNICATIONS CORP., LTD.) 12 July 2018 (2018-07-12) entire document | 1-42 |
| A | CN 108023721 A (HUAWEI TECHNOLOGIES CO., LTD.) 11 May 2018 (2018-05-11) entire document | 1-42 |
| A | HUAWEI et al. "Support of a max DL TBS of 1736 bits in LTE-MTC" R1-2100255, 3GPP TSG RAN WG1 Meeting #104-e, 05 February 2021 (2021-02-05), section 2 | 1-42 |
| A | HUAWEI等 (HUAWEI et al.). "Discussion on applications and traffic model for XR and Cloud Gaming" R1-2100207, 3GPP TSG RAN WG1 Meeting #104-e, 05 February 2021 (2021-02-05), section 3.4 | 1-42 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 April 2022** | **26 April 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/082478**

| Patent document cited in search report | | | Publication date (day/month/year) | Patent family member(s) | | | Publication date (day/month/year) |
|---|---|---|---|---|---|---|---|
| CN | 111988849 | A | 24 November 2020 | None | | | |
| WO | 2018126414 | A1 | 12 July 2018 | TW | 201826768 | A | 16 July 2018 |
| | | | | CN | 110115084 | A | 09 August 2019 |
| | | | | CN | 111092693 | A | 01 May 2020 |
| | | | | EP | 3554162 | A1 | 16 October 2019 |
| | | | | JP | 2020516098 | A | 28 May 2020 |
| | | | | US | 2019327018 | A1 | 24 October 2019 |
| | | | | KR | 20190102002 | A | 02 September 2019 |
| | | | | US | 2020287655 | A1 | 10 September 2020 |
| WO | 2018126413 | A1 | 12 July 2018 | CN | 110178325 | A | 27 August 2019 |
| | | | | US | 2019349115 | A1 | 14 November 2019 |
| | | | | KR | 20190102256 | A | 03 September 2019 |
| | | | | TW | 201826770 | A | 16 July 2018 |
| | | | | JP | 2020507946 | A | 12 March 2020 |
| | | | | EP | 3553980 | A1 | 16 October 2019 |
| CN | 108023721 | A | 11 May 2018 | US | 2021068090 | A1 | 04 March 2021 |
| | | | | EP | 3537644 | A1 | 11 September 2019 |
| | | | | WO | 2018082661 | A1 | 11 May 2018 |
| | | | | CN | 112865945 | A | 28 May 2021 |
| | | | | US | 2019261335 | A1 | 22 August 2019 |
| | | | | JP | 2019534647 | A | 28 November 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110310540X